# EUROPEAN PATENT APPLICATION

(11) **EP 4 753 327 A1**
(43) Date of publication of application: **03.06.2026**
(21) Application number: 24850730.3
(22) Date of filing: 05.07.2024
(51) Int. Cl.: H04W 36/00

(54) **COMMUNICATION METHOD AND COMMUNICATION APPARATUS**

(30) Priority: 10.08.2023 CN 202311015301; 22.08.2023 CN 202311064927
(71) Applicant: HUAWEI TECHNOLOGIES CO., LTD., Shenzhen 518129 (CN)
(72) Inventor: ZHANG, Roujia, Shenzhen, Guangdong 518129 (CN); SUN, Fei, Shenzhen, Guangdong 518129 (CN); ZHU, Yuanping, Shenzhen, Guangdong 518129 (CN); SHI, Yulong, Shenzhen, Guangdong 518129 (CN); ZHU, Shichao, Shenzhen, Guangdong 518129 (CN)
(74) Representative: Gill Jennings & Every LLP
(86) International application number: PCT/CN2024/104018
(87) International publication number: WO 2025/031079

(57) **Abstract**

A communication method and a communication apparatus may be applied to an IAB system, or an access network system including a CU-DU split architecture. In scenarios where a terminal device accessing a relay node is handed over from a source cell to a target cell, random access channel-less handover configuration information is sent to the terminal device, so that the terminal device can access the target cell without performing a random access procedure, thereby reducing handover interruption time from the source cell to the target cell, and helping improve communication performance of the terminal device. The method may include: determining first beam information to be used for communication between a terminal device and a target cell, where the first beam information includes a beam identifier of a first beam, communication of the terminal device is to be handed over from a source cell to a target cell, and the source cell and the target cell of the terminal device are cells of a relay node; and sending random access channel-less handover configuration information to the terminal device, where the random access channel-less handover configuration information includes the first beam information.

## Description

This application claims priorities to Chinese Patent Application No. 202311015301.7, filed with the China National Intellectual Property Administration on August 10, 2023 and entitled "COMMUNICATION METHOD AND COMMUNICATION APPARATUS", and to Chinese Patent Application No. 202311064927.7, filed with the China National Intellectual Property Administration on August 22, 2023 and entitled "COMMUNICATION METHOD AND COMMUNICATION APPARATUS", both of which are incorporated herein by reference in their entireties.

### TECHNICAL FIELD

This application relates to the field of communication technologies, and in particular, to a communication method and a communication apparatus.

### BACKGROUND

Integrated access and backhaul (integrated access and backhaul, IAB) can not only meet the requirement for dense base station deployment, and but also support flexible fiber deployment while reducing optical fiber deployment costs. IAB is a relay solution, and may include an IAB node (IAB node) and an IAB donor (IAB donor). The IAB donor is a donor node of the IAB node. The IAB node may also be referred to as a relay node, a relay device, or the like. A child node of the IAB node may be another IAB node or user equipment (user equipment, UE), and a parent node of the IAB node may be another IAB node or another IAB donor. The IAB node includes a mobile termination (mobile termination, MT) part and a distributed unit (distributed unit, DU) part, which are respectively represented as IAB-MT and IAB-DU. When the IAB node operates toward a parent node of the IAB node, the IAB node serves as an IAB-MT; and when the IAB node operates toward a child node of the IAB node, the IAB node serves as an IAB-DU. The IAB donor may also be referred to as a donor device, a donor node, a donor base station (donor base station), or the like. The IAB donor includes a central unit (central unit, CU) part and a DU part, which are respectively represented as IAB-donor-CU and IAB-donor-DU.

Due to the mobility of the IAB node, the communication of UE in a connected state that accesses the IAB node may be handed over from one cell to another cell, that is, handed over from a source cell to a target cell. How to reduce handover interruption time is a technical problem to be urgently resolved.

### SUMMARY

Embodiments of this application provide a communication method and a communication apparatus, to reduce handover interruption time during which a terminal device is handed over from a source cell to a target cell, and help improve communication performance of the terminal device.

According to a first aspect, an embodiment of this application provides a communication method. The method may be performed by a first donor node, or may be performed by an apparatus, for example, a chip, a chip system, or a processor, in the first donor node. Optionally, the method may be performed by a CU of the first donor node, or may be performed by a chip, a processor, or the like in the CU. The method may include: determining first beam information to be used for communication between a terminal device and a target cell, where the first beam information includes a beam identifier of a first beam, communication of the terminal device is to be handed over from a source cell to a target cell, and the source cell and the target cell of the terminal device are cells of a relay node; and sending random access channel-less handover configuration information to the terminal device, where the random access channel-less handover configuration information includes the first beam information.

According to this method, the terminal device may directly communicate with the target cell based on the first beam information, without performing a random access procedure (including beam selection), to access the target cell. This can reduce handover interruption time during a handover from the source cell to the target cell, and help improve communication performance of the terminal device.

In a possible implementation, before determining the first beam information, the CU of the first donor node receives beam measurement information of the target cell from a source DU, where the beam measurement information includes a beam identifier of at least one beam (where one beam identifier is for identifying one beam), and the at least one beam includes the first beam. Therefore, the CU of the first donor node may determine the first beam based on the beam measurement information; or the CU of the first donor node may send the beam measurement information to a target DU, so that the target DU determines the first beam. Both the source DU and the target DU belong to the relay node, in other words, the relay node includes the source DU and the target DU.

The CU of the first donor node may directly receive the beam measurement information of the target cell from the source DU, in other words, the source DU directly sends the beam measurement information of the target cell to the CU of the first donor node. The beam measurement information may be included in a radio resource control (radio resource control, RRC) message, and the RRC message may be included in F1AP signaling.

The CU of the first donor node may alternatively receive the beam measurement information of the target cell from the source DU via a second donor node. To be specific, the source DU sends the beam measurement information of the target cell to a CU of the second donor node, and the CU of the second donor node sends the beam measurement information of the target cell to the CU of the first donor node. The beam measurement information sent by the source DU to the CU of the second donor node may be included in an RRC message, and the RRC message may be included in F1AP signaling. The beam measurement information sent by the CU of the second donor node to the CU of the first donor node is included in XnAP signaling.

The relay node has established a connection to the first donor node. This may be understood as that the source DU of the relay node has established an F1 connection to the CU of the first donor node. Alternatively, a connection between the relay node and a donor node is migrated from the second donor node to the first donor node. This may be understood as that the source DU of the relay node first establishes an F1 connection to the CU of the second donor node, and as the relay node moves, the F1 connection is disconnected, and the target DU of the relay node establishes an F1 connection to the CU of the first donor node.

Optionally, the beam measurement information further includes signal quality of the at least one beam, and may be specifically signal quality of each of the at least one beam, so that the first beam can be determined based on the signal quality of the at least one beam. The first beam may be a beam with best signal quality in the at least one beam.

In a possible implementation, the CU of the first donor node may determine the first beam information in any one of the following manners.

Manner 1: The CU of the first donor node directly determines the first beam from the at least one beam based on the beam measurement information of the target cell, to further determine the first beam information.

Manner 2: The CU of the first donor node sends the beam measurement information of the target cell to the target DU, the target DU determines the first beam information based on the beam measurement information of the target cell, and the target DU sends the first beam information to the CU of the first donor node. Optionally, the first beam information is directly included in F1AP signaling, or the first beam information is included in an RRC message, and the RRC message is included in F1AP signaling.

Manner 3: The CU of the first donor node receives the first beam information from the CU of the second donor node. In other words, the first beam information is determined by the CU of the second donor node, and the first beam information is included in XnAP signaling.

In a possible implementation, in the foregoing Manner 1 or Manner 3, the CU of the first donor node may further send the first beam information to the target DU (sending the first beam information to the target DU by using F1AP signaling), and the target DU sends the first beam information to the CU of the first donor node (sending the first beam information to the CU of the first donor node by using an RRC message, where the RRC message is included in F1AP signaling). The target DU sends the first beam information to the CU of the first donor node, so that the CU of the first donor node generates a handover command, where the handover command may include random access channel-less handover configuration information.

In a possible implementation, that the CU of the first donor node sends the random access channel-less handover configuration information to the terminal device may include: The source DU sends the random access channel-less handover configuration information to the terminal device. This may be understood as that the CU of the first donor node sends the random access channel-less handover configuration information to the source DU, and then the source DU transparently transmits the random access channel-less handover configuration information to the terminal device. Alternatively, the second donor node and the source DU send the random access channel-less handover configuration information to the terminal device, to be specific, the CU of the first donor node sends the random access channel-less handover configuration information to the CU of the second donor node through an Xn interface, the CU of the second donor node sends the random access channel-less handover configuration information to the source DU, and then the source DU transparently transmits the random access channel-less handover configuration information to the terminal device.

In a possible implementation, before determining the first beam information, the CU of the first donor node receives first information, and determines, based on the first information, that the terminal device needs to perform a random access channel-less handover procedure. The CU of the first donor node sends the random access channel-less handover configuration information to the terminal device only when determining that the terminal device needs to perform the random access channel-less handover procedure.

In a possible implementation, the first information is from the second donor node, and the first information indicates that the terminal device needs to perform the random access channel-less handover procedure. In other words, the second donor node determines that the terminal device needs to perform the random access channel-less handover procedure, and indicates the first donor node that the terminal device needs to perform the random access channel-less handover procedure.

In a possible implementation, the first information is from the source DU or the second donor node, and the first information indicates that the source cell of the terminal device and the target cell of the terminal device are cells of the relay node. In other words, the source DU or the second donor node may send, to the first donor node, the first information that directly or indirectly indicates that the source cell and the target cell are cells of the relay node, and the first donor node determines, based on the first information, that the terminal device needs to perform the random access channel-less handover procedure.

In a possible implementation, the first information is from the target DU, the first information indicates cell information of a first cell, and the first cell is a cell activated when the relay node is connected to the second donor node. In other words, the first cell is a cell activated by the source DU when the source DU establishes an F1 connection to the CU of the second donor node. Therefore, that the CU of the first donor node determines, based on the first information, that the terminal device needs to perform the random access channel-less handover procedure may include: receiving a cell identifier of the source cell and a cell identifier of the target cell from the second donor node; in response to that the cell identifier of the source cell is in the cell information of the first cell and the cell identifier of the target cell is in cell information of a second cell, determining that the source cell and the target cell are cells of the relay node; and in response to that the source cell and the target cell are cells of the relay node, determining that the terminal device needs to perform the random access channel-less handover procedure.

According to a second aspect, an embodiment of this application provides a communication method. The method may be performed by a second donor node, or may be performed by an apparatus, for example, a chip, a chip system, or a processor, in the second donor node. Optionally, the method may be performed by a CU of the second donor node, or may be performed by a chip, a processor, or the like in the CU. The method may include: determining first beam information to be used for communication between a terminal device and a target cell, where the first beam information includes a beam identifier of a first beam, communication of the terminal device is to be handed over from a source cell to a target cell, and the source cell and the target cell of the terminal device are cells of a relay node; and sending random access channel-less handover configuration information to the terminal device, where the random access channel-less handover configuration information includes the first beam information. Therefore, the terminal device may directly communicate with the target cell based on the first beam information, without performing a random access procedure (including beam selection), to access the target cell. This can reduce handover interruption time during a handover from the source cell to the target cell, and help improve communication performance of the terminal device.

The relay node has established a connection to a first donor node. This may be understood as that the source DU of the relay node has established an F1 connection to a CU of the first donor node. Alternatively, a connection between the relay node and a donor node is migrated from the second donor node to the first donor node. This may be understood as that the source DU of the relay node first establishes an F1 connection to the CU of the second donor node, and as the relay node moves, the F1 connection is disconnected, and the target DU of the relay node establishes an F1 connection to the CU of the first donor node.

In a possible implementation, before determining the first beam information, the CU of the second donor node receives beam measurement information of the target cell from the source DU, where the beam measurement information includes a beam identifier of at least one beam, and the at least one beam includes a first beam. In this way, the CU of the second donor node may determine the first beam based on the beam measurement information.

Optionally, the beam measurement information further includes signal quality of the at least one beam, and may be specifically signal quality of each of the at least one beam, so that the first beam can be determined based on the signal quality of the at least one beam. The first beam may be a beam with best signal quality in the at least one beam.

In a possible implementation, the CU of the second donor node sends, to the CU of the first donor node, the beam measurement information of the target cell received by the CU of the second donor node from the source DU, so that the CU of the first donor node can determine the first beam information based on the beam measurement information.

In a possible implementation, the CU of the second donor node determines the first beam from the at least one beam directly based on the beam measurement information of the target cell, to further determine the first beam information.

In a possible implementation, after determining the first beam information, the CU of the second donor node sends the first beam information to the CU of the first donor node, so that the CU of the first donor node generates random access channel-less handover configuration information, and sends the random access channel-less handover configuration information to the CU of the second donor node, and the CU of the second donor node sends the random access channel-less handover configuration information to the terminal device via the source DU.

In a possible implementation, the method provided in the second aspect further includes: sending first information to the first donor node, where the first information indicates that the source cell and the target cell of the terminal device are cells of the relay node (where the first information may be determined by the CU of the second donor node or may be from the source DU), or the first information indicates that the terminal device needs to perform the random access channel-less handover procedure.

In a possible implementation, the method provided in the second aspect further includes: sending a cell identifier of the source cell and a cell identifier of the target cell to the first donor node, so that the first donor node determines whether the source cell and the target cell are cells of the relay node.

According to a third aspect, an embodiment of this application provides a communication method. The method may be performed by a target DU, or may be performed by an apparatus, for example, a chip, a chip system, or a processor, in the target DU. The target DU belongs to a relay node, and a source cell and a target cell of a terminal device are cells of the relay node. The method may include: receiving beam measurement information of the target cell of the terminal device from a first donor node, where the beam measurement information includes a beam identifier of at least one beam; determining, based on the beam measurement information of the target cell, first beam information to be used for communication between the terminal device and the target cell, where the first beam information includes a beam identifier of a first beam, and the at least one beam includes the first beam; and sending the first beam information to the first donor node.

It can be learned that the target DU may determine the first beam information based on the beam measurement information of the target cell from the first donor node, and send the first beam information to the first donor node, so that the first donor node can deliver the first beam information to the terminal device, and the terminal device can access the target cell without performing a random access procedure. This can reduce handover interruption time during which the terminal device is handed over from the source cell to the target cell, and help improve communication performance of the terminal device.

In a possible implementation, the method provided in the third aspect further includes: sending first information to the first donor node, where the first information indicates cell information of a first cell, and the first cell is a cell activated when the relay node is connected to a second donor node. In other words, the first cell may be a cell activated when a source DU of the relay node establishes an F1 connection to a CU of the second donor node. The target DU sends the cell information of the first cell to the first donor node, so that the first donor node determines, based on the cell information of the first cell, whether the source cell and the target cell of the terminal device are cells of the relay node. Optionally, the target DU may learn of the cell information of the first cell from the source DU.

According to a fourth aspect, an embodiment of this application provides a communication method. The method may be performed by a target DU, or may be performed by an apparatus, for example, a chip, a chip system, or a processor, in the target DU. The target DU belongs to a relay node, and a source cell and a target cell of a terminal device are cells of the relay node. The method may include: receiving first beam information from a first donor node, where the first beam information includes a beam identifier of a first beam, and the first beam information is beam information to be used for communication between a terminal device and a target cell; and sending the first beam information to the first donor node, where the first beam information is included in an RRC message. The RRC message is included in F1AP signaling.

It can be learned that the first donor node sends the first beam information to the target DU, so that the target DU includes the first beam information in the RRC message, and sends the RRC message to the first donor node. In this way, the first donor node can deliver the first beam information to the terminal device, and the terminal device can access the target cell without performing a random access procedure. This can reduce handover interruption time during which the terminal device is handed over from the source cell to the target cell, and help improve communication performance of the terminal device.

In a possible implementation, the method provided in the third aspect further includes: sending first information to the first donor node, where the first information indicates cell information of a first cell, and the first cell is a cell activated when the relay node is connected to a second donor node. The target DU sends the cell information of the first cell to the first donor node, so that the first donor node determines, based on the cell information of the first cell, whether the source cell and the target cell of the terminal device are cells of the relay node. Optionally, the target DU may learn of the cell information of the first cell from the source DU.

According to a fifth aspect, an embodiment of this application provides a communication method. The method may be performed by a source DU, or may be performed by an apparatus, for example, a chip, a chip system, or a processor, in the source DU. The source DU belongs to a relay node, and a source cell and a target cell of a terminal device are cells of the relay node. The method may include: receiving random access channel-less handover configuration information from a first donor node, where the random access channel-less handover configuration information includes first beam information, and the first beam information includes a beam identifier of a first beam; sending the random access channel-less handover configuration information to the terminal device, where the first beam information is beam information to be used for communication between the terminal device and the target cell, communication of the terminal device is to be handed over from the source cell to the target cell, and the source cell and the target cell are cells of the relay node.

It can be learned that the first donor node sends the first beam information to the terminal device via the source DU, so that the terminal device can access the target cell without performing a random access procedure. This can reduce handover interruption time during which the terminal device is handed over from the source cell to the target cell, and help improve communication performance of the terminal device.

In a possible implementation, the random access channel-less handover configuration information from the first donor node is received via a second donor node. In other words, the first donor node sends the first beam information to the source DU via the second donor node, so that the source DU transparently transmits the first beam information to the terminal device.

The relay node has established a connection to the first donor node. This may be understood as that the source DU of the relay node has established an F1 connection to a CU of the first donor node. Alternatively, a connection between the relay node and a donor node is migrated from the second donor node to the first donor node. This may be understood as that the source DU of the relay node first establishes an F1 connection to a CU of the second donor node, and as the relay node moves, the F1 connection is disconnected, and the target DU of the relay node establishes an F1 connection to the CU of the first donor node.

In a possible implementation, the method provided in the fifth aspect further includes: sending beam measurement information of the target cell to the first donor node; or sending beam measurement information of the target cell to the first donor node via the second donor node. Therefore, the first donor node may learn of the beam measurement information of the target cell, to further determine the first beam information based on the beam measurement information. The beam measurement information includes a beam identifier of at least one beam, and the at least one beam includes the first beam.

In a possible implementation, the method provided in the fifth aspect further includes: sending first information, where the first information indicates that the source cell of the terminal device and the target cell of the terminal device are cells of the relay node. Optionally, the source DU directly sends the first information to the first donor node; or the source DU sends the first information to the first donor node via the second donor node, so that the first donor node can determine, based on the first information, that the terminal device needs to perform a random access channel-less handover procedure. Optionally, the source DU sends the first information to the second donor node, and the second donor node determines, based on the first information, that the terminal device needs to perform the random access channel-less handover procedure, so that the second donor node can indicate the first donor node that the terminal device needs to perform the random access channel-less handover procedure.

According to a sixth aspect, an embodiment of this application provides a communication apparatus. The communication apparatus may be a first donor node, or may be an apparatus in the first donor node, or may be an apparatus that can be used in combination with the first donor node. The communication apparatus may alternatively be a chip system. The communication apparatus may perform the method according to the first aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effects, refer to the method and the beneficial effects in the first aspect.

According to a seventh aspect, an embodiment of this application provides a communication apparatus. The communication apparatus may be a second donor node, or may be an apparatus in the second donor node, or may be an apparatus that can be used in combination with the second donor node. The communication apparatus may alternatively be a chip system. The communication apparatus may perform the method according to the second aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effects, refer to the method and the beneficial effects in the second aspect.

According to an eighth aspect, an embodiment of this application provides a communication apparatus. The communication apparatus may be a target DU, or may be an apparatus in the target DU, or may be an apparatus that can be used in combination with the target DU. The communication apparatus may alternatively be a chip system. The communication apparatus may perform the method according to the third aspect or the fourth aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effects, refer to the method and beneficial effects in the third aspect or the fourth aspect.

According to a ninth aspect, an embodiment of this application provides a communication apparatus. The communication apparatus may be a source DU, or may be an apparatus in the source DU, or may be an apparatus that can be used in combination with the source DU. The communication apparatus may alternatively be a chip system. The communication apparatus may perform the method according to the fifth aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effect, refer to the method and beneficial effect according to the fifth aspect.

According to a tenth aspect, an embodiment of this application provides a communication apparatus. The communication apparatus includes a processor, the processor is coupled to a memory, the memory is configured to store a program or instructions, and when the program or the instructions are executed by the processor, the communication apparatus is caused to perform the method according to any one of the first aspect to the fifth aspect.

According to an eleventh aspect, an embodiment of this application provides a communication apparatus. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the first aspect to the fifth aspect by using a logic circuit or executing code instructions.

According to a twelfth aspect, an embodiment of this application provides a computer-readable storage medium. The computer-readable storage medium stores a computer program or instructions, and when the computer program or the instructions are executed by a communication apparatus, the method according to any one of the first aspect to the fifth aspect is implemented.

According to a thirteenth aspect, an embodiment of this application provides a computer program product including instructions. When a communication apparatus reads and executes the instructions, the communication apparatus is caused to perform the method according to any one of the first aspect to the fifth aspect.

According to a fourteenth aspect, an embodiment of this application provides a communication system. The communication system includes a first donor node and a target DU, the first donor node is configured to perform the method provided in the first aspect, and the target DU is configured to perform the method provided in the third aspect or the fourth aspect. Alternatively, the communication system includes a first donor node, a second donor node, and a target DU. The first donor node is configured to perform the method provided in the first aspect, the second donor node is configured to perform the method provided in the second aspect, and the target DU is configured to perform the method provided in the third aspect or the fourth aspect. Optionally, the communication system further includes a source DU, configured to perform the method provided in the fifth aspect.

### BRIEF DESCRIPTION OF DRAWINGS

FIG. 1 is a diagram of a wireless relay scenario;
FIG. 2 is an example diagram of a distributed unit migration (DU migration) scenario;
FIG. 3 is a diagram of a contention-free random access procedure;
FIG. 4 is an example diagram of a system architecture to which embodiments of this application are applied;
FIG. 5 is a schematic flowchart of a communication method according to an embodiment of this application;
FIG. 5A is a schematic flowchart of determining that UE needs to perform a random access channel-less handover procedure according to an embodiment of this application;
FIG. 6-1 and FIG. 6-2 are a schematic flowchart of another communication method according to an embodiment of this application;
FIG. 6A-1 and FIG. 6A-2 are another schematic flowchart of determining that UE needs to perform a random access channel-less handover procedure according to an embodiment of this application;

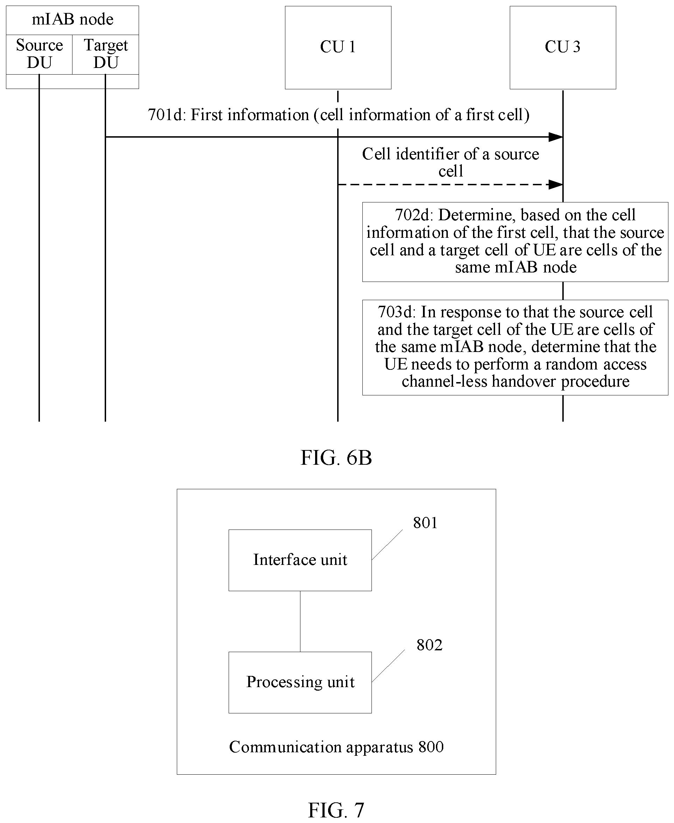

FIG. 6B is another schematic flowchart of determining that UE needs to perform a random access channel-less handover procedure according to an embodiment of this application;
FIG. 7 is a diagram of a structure of a communication apparatus according to an embodiment of this application; and

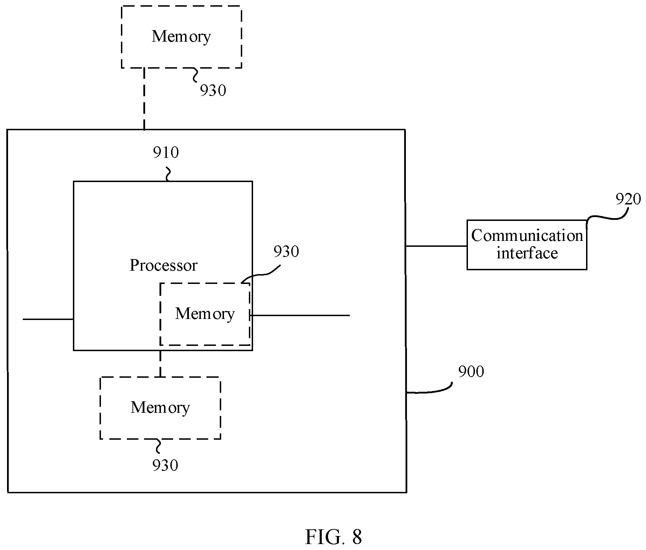

FIG. 8 is a diagram of a structure of another communication apparatus according to an embodiment of this application.

### DESCRIPTION OF EMBODIMENTS

In this application, terms such as "first" and "second" are used for distinguishing between same items or similar items with basically same roles and functions. A person skilled in the art may understand that the terms such as "first" and "second" do not limit a quantity or an execution sequence, and the terms such as "first" and "second" do not indicate a definite difference. The term "and/or" describes an association relationship between associated objects and indicates that three relationships may exist. For example, A and/or B may represent the following three cases: Only A exists, both A and B exist, and only B exists. The character "/" generally indicates an "or" relationship between the associated objects.

It should be understood that, in this application, "at least one" means one or more, and "a plurality of' means two or more. In addition, "equal to" in this application may be used together with "greater than", or may be used together with "less than". When "equal to" and "greater than" are used together, a technical solution corresponding to "greater than" is used; and when "equal to" and "less than" are used together, a technical solution corresponding to "less than" is used.

The following first describes related names or terms in this application, to facilitate understanding by a person skilled in the art.

### 1. IAB network

In the IAB network, an IAB node (IAB node) may also be referred to as a relay node (relay node, RN), a relay device, or the like. The IAB node may provide a radio access service for UE, and service data of the UE is transmitted by the IAB node to an IAB donor via a backhaul link.

The IAB node includes an IAB-MT and an IAB-DU. When the IAB node operates toward a parent node of the IAB node, the IAB node may serve as the IAB-MT; and when the IAB node operates toward a child node of the IAB node (where the child node may be another IAB node or UE), the IAB node may be considered as a network device, to be specific, a role of the IAB-DU.

The IAB donor includes an IAB-donor-CU and an IAB-donor-DU. The IAB donor may be an access network device having a complete base station function, or may be an access network device in which a CU and a DU are separated. The IAB donor is connected to a core network element (for example, connected to a 5G core (5G core, 5GC) network element) that provides a service for the UE, and provides a wireless backhaul function for the IAB node. The IAB-donor CU may be in a form in which a control plane (control plane, CP) and a user plane (user plane, UP) are separated. For example, the IAB-donor-CU may include one IAB-donor-CU-CP and one (or more) IAB-donor-CU-UP.

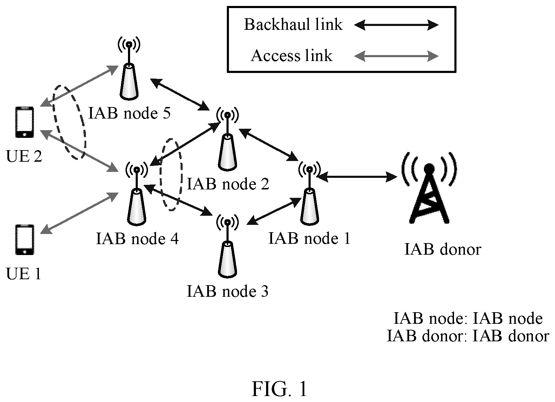

In the IAB network, there may be one or more IAB nodes on a transmission path between the UE and the IAB donor. Each IAB node maintains a backhaul link to a parent node, and maintains an access link to a child node. If the child node of the IAB node is the UE, a link between the IAB node and the UE is an access link. If the child node of the IAB node is another IAB node, a link between the IAB node and the another IAB node is a backhaul link. For example, as shown in a wireless relay scenario in FIG. 1, in a path "UE 1→IAB node 4→IAB node 3→IAB node 1→IAB donor", the UE 1 accesses the IAB node 4 through an access link, the IAB node 4 is connected to the IAB node 3 through a backhaul link, the IAB node 3 is connected to the IAB node 1 through a backhaul link, and the IAB node 1 is connected to the IAB donor through a backhaul link. In FIG. 1, a black bidirectional arrow represents a backhaul link, and a gray bidirectional arrow represents an access link.

In this embodiment of this application, a relay node may be an access IAB node. The access IAB node refers to an IAB node accessed by the UE. For example, as shown in FIG. 1, in the path "UE 1→IAB node 4→IAB node 3→IAB node 1→IAB donor", the IAB node 4 is an access IAB node.

In this embodiment of this application, a donor node may be an IAB donor, and a CU and a DU of the IAB donor may be deployed in a split architecture or a non-split architecture, depending on a specific situation.

The CU may be an apparatus in an open radio access network (open radio access network, O-RAN or ORAN) architecture, for example, an open CU. The DU (for example, an IAB-DU) may alternatively be an apparatus in an O-RAN architecture, for example, may be an apparatus such as an open DU.

### 2. Distributed unit migration (DU migration)

With development of communication technologies and evolution of standards, an IAB node may have mobility. For example, the IAB node may be installed on a moving object, and the IAB node may move with the movement of the moving object. For example, the IAB node may be installed on a vehicle, and moves with the movement of the vehicle. An IAB node installed on a vehicle may be referred to as a vehicle-mounted relay (vehicle-mounted relay, VMR) node. An IAB node with mobility may be referred to as a mobile IAB node (mobile IAB node, mIAB node).

For the mIAB node, because a coverage area of an IAB-donor-CU is limited, an F1 connection between the mIAB node and an IAB-DU cannot be continuously maintained. Therefore, in consideration of the mobility of the IAB node or a load balancing requirement on a radio access network (radio access network, RAN) side, an F1 connection of the IAB-DU may be migrated from a source F1-terminating donor-CU to a target F1-terminating donor-CU.

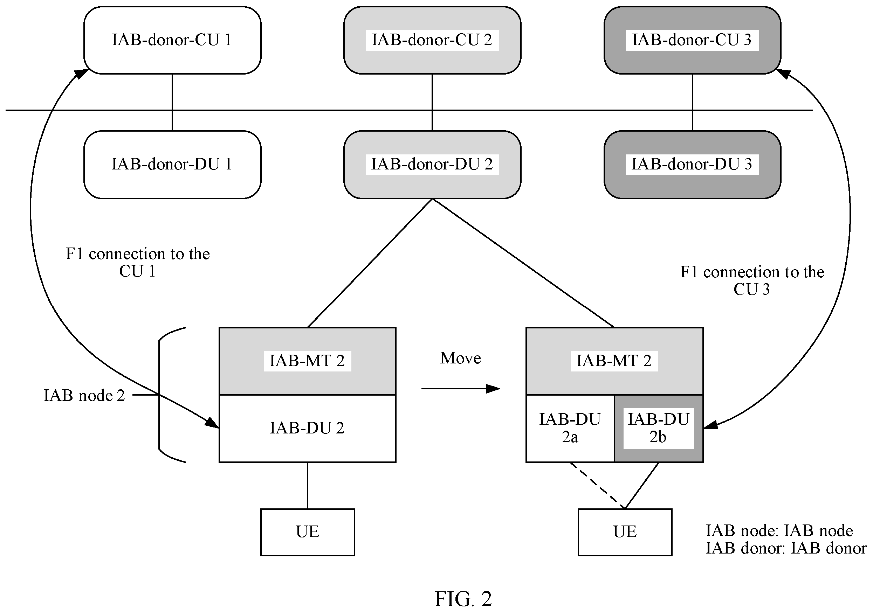

For example, refer to an example diagram of a distributed unit migration scenario shown in FIG. 2. In FIG. 2, an IAB node 2 includes two logical DUs, to be specific, an IAB-DU 2 includes an IAB-DU 2a and an IAB-DU 2b. Before moving, the IAB node 2 has established an F1 connection to an IAB-donor-CU 1 via the IAB-DU 2a, an IAB-MT 2 has established an RRC connection to an IAB-donor-CU 2, and the IAB-DU 2b is in a to-be-activated state. In other words, before the IAB node 2 moves, the F1 connection of the IAB node 2 is terminated at the IAB-donor-CU 1. After the IAB node 2 moves, the IAB-donor-CU 1 or an OAM device may determine to migrate the F1 connection of the IAB node 2 to an IAB-donor-CU 3, to trigger the IAB node 2 to perform a distributed unit migration process, to be specific, the IAB node 2 activates the IAB-DU 2b and establishes an F1 connection to the IAB-donor-CU 3 via the IAB-DU 2b. In this case, the IAB-MT 2 can still maintain the RRC connection to the IAB-donor-CU 2.

It should be noted that, in FIG. 2, an example in which the IAB-donor-CU 1, the IAB-donor-CU 2, and the IAB-donor-CU 3 are three different CUs is used. In actual application, the IAB-donor-CU 1 and the IAB-donor-CU 2 may be a same CU (in other words, a source F1-terminating donor-CU and a non-F1-terminating donor-CU are the same CU); or the IAB-donor-CU 2 and the IAB-donor-CU 3 may be a same CU (in other words, a non-F1-terminating donor-CU and a target F1-terminating donor-CU are the same CU).

It should be noted that, when the mIAB node does not need to perform distributed unit migration (for example, a cell identifier of the mIAB node conflicts with a cell identifier of a neighboring cell due to mobility), the mIAB node may alternatively include two activated logical DUs (for example, the IAB-DU 2a and the IAB-DU 2b in FIG. 2).

### 3. Random access (random access/random access channel, RA/RACH) procedure in a 5G system

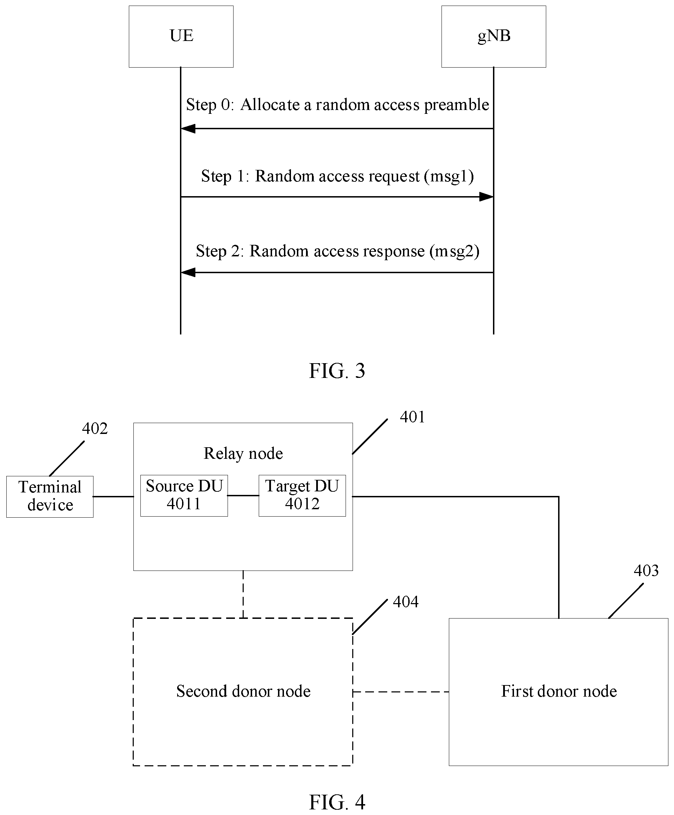

The random access procedure in the 5G system means that UE sends a preamble to a network device (for example, a gNB) to access the network device. A random access procedure may include a contention-based random access procedure and a contention-free random access procedure. For example, refer to the contention-free random access procedure shown in FIG. 3. The procedure may include the following steps.

Step 0: Allocate a random access preamble. A gNB allocates a random access resource, for example, the random access preamble, to UE. A message sent by the gNB to the UE may include a preamble indication.

Step 1: The UE sends a random access request, that is, msg1, to the gNB. The random access request may include the random access preamble. Before sending the random access request to the gNB, the UE measures a plurality of downlink beams. For example, an example in which there is an association relationship between a downlink beam and a synchronization signal and physical broadcast channel block (Synchronization Signal and Physical Broadcast Channel Block, SSB) is used. The UE measures SSBs of four beams: SSB#1, SSB#2, SSB#3, and SSB#4. Assuming that signal quality of SSB#3 is relatively good, the UE selects a time-frequency resource corresponding to SSB#3 to send the random access request. After receiving the random access preamble on the time-frequency resource, the gNB learns that the gNB needs to use a beam corresponding to SSB#3 when communicating with the UE.

Step 2: The gNB feeds back a random access response, that is, msg2, to the UE. The gNB may send the random access response to the UE by using a beam, for example, SSB#3, determined in step 1.

In the random access procedure, the gNB may determine timing advance (timing advance, TA) information of the UE based on the received random access preamble, and include a TA in the random access response. Further, after receiving the random access response, the UE may adjust an uplink sending time based on the carried TA, to complete uplink synchronization with the gNB. In other words, the UE completes uplink synchronization with the gNB through the random access procedure. In addition, the UE may further complete beam alignment with the gNB, to improve communication quality.

### 4. Random access channel-less handover (random access channel-less handover, RACH-less HO)

When UE is handed over from a source cell to a target cell, the UE needs to complete uplink synchronization with the target cell, to be specific, obtain a TA of the target cell. In a common cell handover procedure, the UE completes uplink synchronization with the target cell through a random access procedure. This procedure results in a period of handover interruption time.

In long term evolution (Long Term Evolution, LTE), the RACH-less HO is introduced. A handover command sent by the source cell to the UE indicates the TA of the target cell, and the UE sends an uplink message to the target cell by directly using the TA. In other words, the UE obtains the TA, to be specific, the UE completes uplink synchronization with the target cell. This avoids or reduces uplink synchronization with the target cell through a RACH procedure, to reduce handover interruption time.

The following describes a scenario and a system architecture to which this application is applied.

During movement of an mIAB node, communication of UE that is in a connected state and that accesses the mIAB node may be handed over from one cell to another cell, that is, handed over from a source cell to a target cell. If the UE completes uplink synchronization with the target cell through a RACH procedure, this results in a period of handover interruption time. Therefore, how to reduce the handover interruption time is a technical problem to be urgently resolved.

In view of this, embodiments of this application provide a communication method and a communication apparatus, to reduce handover interruption time during which a terminal device is handed over from a source cell to a target cell, and help improve communication performance of the terminal device.

In an implementation, embodiments of this application may be applied to an intra-CU scenario. To be specific, during movement of an mIAB node, an F1 connection between the mIAB node and an IAB-donor-CU is not migrated. In the intra-CU scenario, after the mIAB node moves, a cell identifier of a cell of the mIAB node may conflict with a cell identifier of another surrounding cell, and the conflict may cause UE to be handed over from a source cell to a target cell. In this case, the communication method provided in embodiments of this application may be used to reduce interruption time.

In another implementation, embodiments of this application may be applied to an inter-CU scenario. To be specific, during movement of the mIAB node, an F1 connection between the mIAB node and an IAB-donor-CU is migrated, for example, from an IAB-donor-CU 1 to an IAB-donor-CU 3. The inter-CU scenario may include but is not limited to a distributed unit migration scenario. For the distributed unit migration scenario, refer to an example diagram of the scenario shown in FIG. 2. In the distributed unit migration scenario, an F1 connection between the mIAB node and the IAB-donor-CU is migrated from the IAB-donor-CU 1 to the IAB-donor-CU 3, and UE accessing the mIAB node may be handed over from a cell of the IAB-DU 2a to a cell of the IAB-DU 2b. In this case, the communication method provided in embodiments of this application may be used to reduce interruption time.

Embodiments of this application are not only applicable to an IAB system, but also applicable to an access network system including a CU-DU split architecture. For example, the IAB-DU 2a may be a gNB 2-DU a, and the IAB-DU 2b may be a gNB 2-DU b. In other words, the gNB 2-DU a and the gNB 2-DU b are two DUs of a gNB 2.

FIG. 4 is an example diagram of a system architecture to which embodiments of this application are applied. The system architecture shown in FIG. 4 includes a relay node 401, a terminal device 402, and a first donor node 403.

The relay node 401 may include a source DU 4011 and a target DU 4012. The source DU 4011 and the target DU 4012 may be two logical DUs of a same IAB node, or may be two DUs of a same gNB. The source DU 4011 includes a source cell of the terminal device 402, and the target DU 4012 includes a target cell of the terminal device 402. In this embodiment of this application, the target DU may determine first beam information to be used for communication between the terminal device and the target cell.

The terminal device 402 may be a mobile device such as UE, or may be a device that plays a role of a terminal device, for example, an IAB-MT. The mobile device may be a mobile phone, a tablet computer, a notebook computer, a palmtop computer, a mobile internet device (mobile internet device, MID), a wearable device (for example, a smartwatch, a smart band, or a pedometer), a vehicle-mounted device (for example, a vehicle, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. For ease of description, an example in which the terminal device is UE is used in this embodiment of this application.

The first donor node 403 is a donor node that has established an F1 connection to the relay node 401. In this embodiment of this application, the first donor node 403 may determine the first beam information to be used for communication between the terminal device and the target cell, and send the first beam information to the terminal device via the source DU.

Optionally, the system architecture shown in FIG. 4 further includes a second donor node 404. The second donor node 404 is a donor node to which the relay node 401 is connected before F1 connection migration. In other words, before establishing the F1 connection to the first donor node 403, the relay node 401 establishes an F1 connection to the second donor node 404. In this case, the source DU 4011 establishes an F1 connection to a CU of the second donor node 404. Because the relay node 401 moves, the target DU 4012 is activated and establishes an F1 connection to a CU of the first donor node 403. In this embodiment of this application, the second donor node 404 may also determine the first beam information to be used for communication between the terminal device and the target cell, and send the first beam information to the first donor node 403, so that the first donor node 403 sends the first beam information to the terminal device via the source DU.

The system architecture shown in FIG. 4 may alternatively be an O-RAN, a cloud radio access network (cloud radio access network, CRAN), or a wireless fidelity (wireless fidelity, Wi-Fi) system. The system architecture shown in FIG. 4 may alternatively be a communication system integrating the foregoing two or more systems.

With reference to the system architecture shown in FIG. 4, the following describes in detail the communication method provided in embodiments of this application. For ease of description, an example in which a CU of a first donor node is a CU 3, a CU of a second donor node is a CU 1, a relay node is an mIAB node (including a source DU and a target DU), and a terminal device is UE is used.

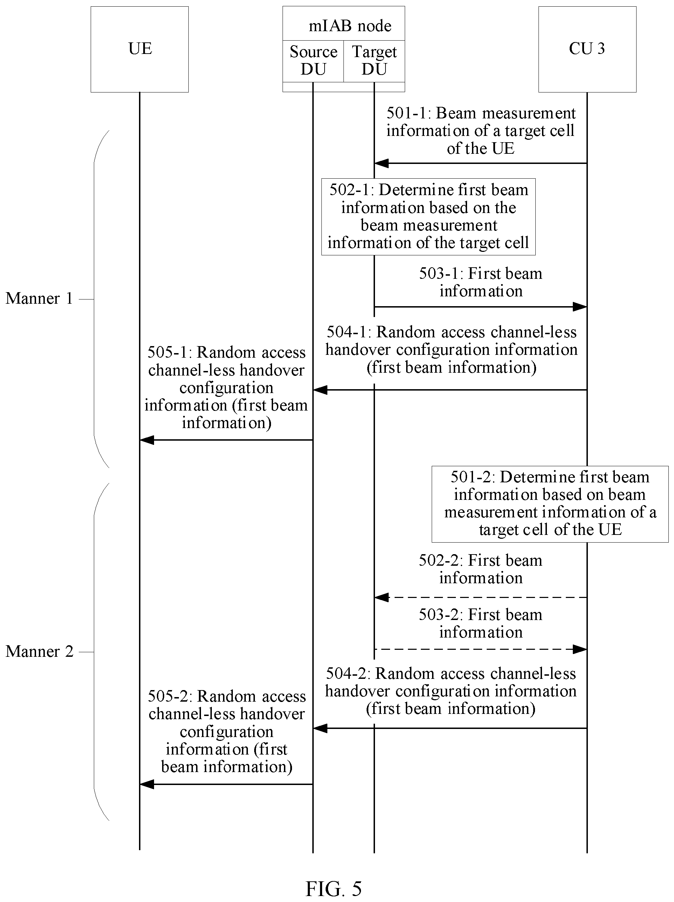

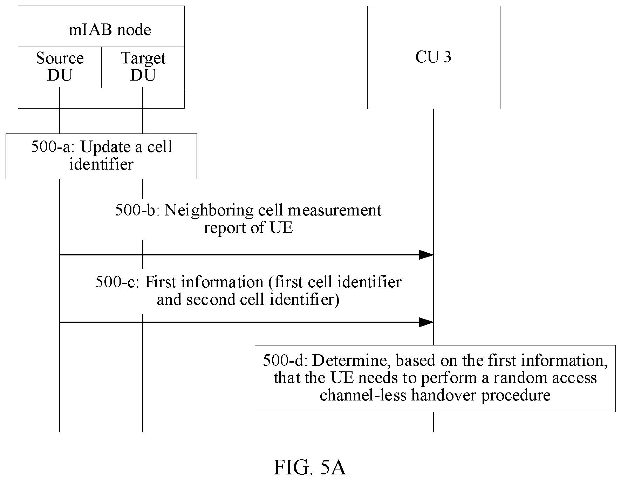

FIG. 5 is a schematic flowchart of a communication method according to an embodiment of this application. The method may include Manner 1 and Manner 2, and either Manner 1 or Manner 2 may be selected. It may be understood that, in Manner 1 shown in step 501-1 to step 505-1, the target DU determines first beam information, and the CU 3 delivers the first beam information to the UE by using random access channel-less handover configuration information. In Manner 2 shown in step 501-2 to step 505-2, the CU 3 determines first beam information, and the CU 3 delivers the first beam information to the UE by using random access channel-less handover configuration information.

### Manner 1:

501-1: The CU 3 sends beam measurement information of a target cell of the UE to the target DU. Correspondingly, the target DU receives the beam measurement information of the target cell of the UE from the CU 3.

In this embodiment shown in FIG. 5, an example in which the source DU and the target DU have separately established an F1 connection to the CU 3 is used, that is, an intra-CU scenario. For example, the CU 3 sends the beam measurement information of the target cell to the target DU by using F1AP signaling, in other words, the F1AP signaling includes the beam measurement information of the target cell. For example, the F1AP signaling may be UE context setup request signaling (that is, UE Context Setup Request signaling).

The beam measurement information of the target cell includes a beam identifier of at least one beam of the target cell. The at least one beam may include a downlink beam and/or an uplink beam. A beam identifier is for identifying a beam. Optionally, a reference signal index may be used to identify a beam. The reference signal index may be a reference signal index (index) such as an SSB index (index) or a channel state information reference signal (channel state information reference signal, CSI-RS). Optionally, an identifier that identifies a reference signal may be used to identify a beam, for example, a transmission configuration indicator (transmission configuration indicator, TCI) state (state) identifier (identifier, ID). One beam corresponds to one beam identifier. In this embodiment of this application, an example in which the beam identifier is an SSB index is used.

Optionally, the beam measurement information of the target cell may further include signal quality of the at least one beam of the target cell, for example, signal quality of an SSB identified by each SSB index. The signal quality may be one or more of the following: reference signal received power (reference signal received power, RSRP), reference signal received quality (reference signal received quality, RSRQ), a signal to interference plus noise ratio (signal to interference plus noise ratio, SINR), a received signal strength indicator (received signal strength indicator, RSSI), and the like.

The target cell is determined by the CU 3 based on a neighboring cell measurement report sent by the source DU. A neighboring cell is a neighboring cell of a source cell of the UE, in other words, a neighboring cell of a serving cell before a cell handover. The neighboring cell measurement report includes a cell identifier of at least one neighboring cell and beam measurement information of the at least one neighboring cell. A process in which the target cell is determined by the CU 3 is described in detail in step 500-d shown in FIG. 5A.

502-1: The target DU determines the first beam information based on the beam measurement information of the target cell. The first beam information is beam information to be used for communication between the UE and the target cell.

The target DU determines, based on the beam measurement information of the target cell, the first beam information to be used for communication between the UE and the target cell. The first beam information includes a beam identifier of a first beam. For example, if the beam measurement information of the target cell includes signal quality of each SSB from SSB#1 to SSB#4, and SSB#3 has best signal quality, a beam corresponding to SSB#3 is selected as the first beam, and the beam identifier of the first beam is SSB#3. In other words, after the UE is handed over from the source cell to the target cell, the UE may communicate with the target cell by directly using the first beam. For example, the UE may send uplink data to the target cell by using the beam corresponding to SSB#3. The UE does not need to perform measurement, and does not need to send a random access preamble to the target cell, thereby helping reduce handover interruption time.

503-1: The target DU sends the first beam information to the CU 3.

After determining the first beam information, the target DU sends the first beam information to the CU 3, so that the CU 3 generates a handover command.

In an implementation, the target DU includes the first beam information in an RRC message, and sends the RRC message to the CU 3 by using F1AP signaling. For example, the target DU sends the RRC message to the CU 3 by using UE context setup response signaling (that is, UE Context Setup Response signaling). The first beam information is included in the RRC message, for example, the first beam information is included in an RRC-container (RRC-Container). That the first beam information is included in the RRC-container may be understood as that RRC layer-related encoding is performed on the first beam information. This implementation may be understood as that the F1AP signaling implicitly includes the first beam information. The F1AP signaling implicitly indicating the first beam information by using the RRC message is a possible manner, and the F1AP signaling may implicitly indicate the first beam information by using another message.

In another implementation, the target DU sends the first beam information to the CU 3 by directly using F1AP signaling, in other words, the F1AP signaling explicitly includes the first beam information. For example, the target DU sends the first beam information to the CU 3 by directly using UE context setup response signaling.

504-1: The CU 3 sends the random access channel-less handover configuration information to the source DU. Correspondingly, the source DU receives the random access channel-less handover configuration information from the CU 3. The random access channel-less handover configuration information includes the first beam information.

The CU 3 generates a handover command based on the first beam information from the target DU, where the handover command may include the random access channel-less handover configuration information, and the random access channel-less handover configuration information includes the first beam information. In other words, the CU 3 generates a handover command that instructs the UE not to perform a random access handover procedure, to distinguish the handover command from a handover command for a non-random access channel-less handover. The handover command for the non-random access channel-less handover instructs the UE to perform a random access procedure to access the target cell.

Optionally, the random access channel-less handover configuration information may further include TA indication information, where the TA indication information indicates the UE to perform uplink synchronization with the target cell based on a TA of the source cell.

Optionally, the random access channel-less handover configuration information may further include uplink grant (UL Grant) indication information, where the UL grant indication information indicates a resource used when the UE performs an uplink data transmission for first time, for example, a time-frequency resource.

In an implementation, the CU 3 includes the random access channel-less handover configuration information in an RRC message, and sends the RRC message to the source DU by using F1AP signaling. The random access channel-less handover configuration information is included in the RRC message, for example, the random access channel-less handover configuration information is included in an RRC container. The F1AP signaling may be, for example, UE context modification request signaling (that is, UE Context Modification Request signaling). If the first beam information is included in the RRC message in step 503-1, in step 504-1, the RRC message also needs to be included in the RRC message that carries the random access channel-less handover configuration information.

In another implementation, the CU 3 sends the random access channel-less handover configuration information to the source DU by directly using F1AP signaling. For example, the CU 3 sends the random access channel-less handover configuration information to the source DU by directly using UE context modification request signaling.

505-1: The source DU sends the random access channel-less handover configuration information to the UE. Correspondingly, the UE receives the random access channel-less handover configuration information from the source DU.

The source DU transparently transmits the received random access channel-less handover configuration information to the UE. If the random access channel-less handover configuration information is included in an RRC message, the source DU directly transparently transmits the RRC message to the UE.

The UE may communicate, based on the received random access channel-less handover configuration information, with the target cell by directly using the first beam information without performing a random access procedure, to reduce handover interruption time.

### Manner 2:

501-2: The CU 3 determines the first beam information based on beam measurement information of a target cell of the UE. The first beam information is beam information to be used for communication between the UE and the target cell.

For the beam measurement information of the target cell and the first beam information, refer to the detailed descriptions of the beam measurement information and the first beam information in step 501-1. Details are not described herein again. For a process in which the CU 3 determines the first beam information, refer to a process in which the target DU determines the first beam information.

Before determining the first beam information, the CU 3 determines the target cell based on a neighboring cell measurement report sent by the source DU. A process in which the target cell is determined by the CU 3 is described in detail in step 500-d shown in FIG. 5A.

Optionally, in 502-2, the CU 3 sends the first beam information to the target DU. Correspondingly, the target DU receives the first beam information from the CU 3.

The CU 3 sends the first beam information to the target DU by using F1AP signaling, and the target DU includes the first beam information in an RRC message. The F1AP signaling may be, for example, UE context setup request signaling.

Optionally, in 503-2, the target DU sends the first beam information to the CU 3. Correspondingly, the CU 3 receives the first beam information from the target DU.

The target DU includes the first beam information in an RRC message based on the first beam information received by using the F1AP signaling. For example, the target DU includes the first beam information in an RRC container, and sends the RRC message to the CU 3 by using F1AP signaling. The F1AP signaling may be, for example, UE context setup response signaling.

The target DU sends the first beam information to the CU 3, so that the CU 3 generates a handover command.

504-2: The CU 3 sends the random access channel-less handover configuration information to the source DU. Correspondingly, the source DU receives the random access channel-less handover configuration information from the CU 3. The random access channel-less handover configuration information includes the first beam information.

The CU 3 generates a handover command based on the first beam information from the target DU, where the handover command may include the random access channel-less handover configuration information, and the random access channel-less handover configuration information includes the first beam information. In other words, the CU 3 generates a handover command that instructs the UE not to perform a random access handover procedure, to distinguish the handover command from a handover command for a non-random access channel-less handover. The handover command for the non-random access channel-less handover instructs the UE to perform a random access procedure to access the target cell.

Optionally, the random access channel-less handover configuration information may further include TA indication information, where the TA indication information indicates the UE to perform uplink synchronization with the target cell based on a TA of a source cell.

Optionally, the random access channel-less handover configuration information may further include uplink grant (UL Grant) indication information, where the UL grant indication information indicates a resource used when the UE performs an uplink data transmission for first time, for example, a time-frequency resource.

In an implementation, the CU 3 includes the random access channel-less handover configuration information in an RRC message, and sends the RRC message to the source DU by using F1AP signaling. The random access channel-less handover configuration information is included in the RRC message, for example, the random access channel-less handover configuration information is included in an RRC container. The F1AP signaling may be, for example, UE context modification request signaling.

In another implementation, the CU 3 sends the random access channel-less handover configuration information to the source DU by directly using F1AP signaling. For example, the CU 3 sends the random access channel-less handover configuration information to the source DU by directly using UE context modification request signaling.

505-2: The source DU sends the random access channel-less handover configuration information to the UE. Correspondingly, the UE receives the random access channel-less handover configuration information from the source DU.

For an implementation process of step 505-2, refer to the detailed descriptions of step 505-1. Details are not described herein again.

In Manner 1 and Manner 2 in the embodiment shown in FIG. 5, the UE may directly communicate with the target cell based on the first beam information, without performing a random access procedure (including beam selection), to access the target cell. This can reduce handover interruption time during a handover from the source cell to the target cell, and help improve communication performance of the terminal device.

FIG. 5A is a schematic flowchart of determining that UE needs to perform a random access channel-less handover procedure according to an embodiment of this application. The procedure may include but is not limited to the following steps.

500-a: An mIAB node updates a cell identifier.

In this embodiment shown in FIG. 5A, an example in which a source DU and a target DU have separately established an F1 connection to a CU 3 is used, that is, an intra-CU scenario.

For example, when determining that a cell identifier conflict exists, the mIAB node triggers a cell identifier update procedure, to be specific, updating a cell identifier of a cell of the source DU. After the mIAB node moves, a cell identifier of a cell of the mIAB node conflicts with a cell identifier of a neighboring cell. For example, if a cell identifier of a cell 1 of the source DU is the same as a cell identifier of a neighboring cell (for example, a cell 3), the mIAB node may trigger an update of the cell identifier of the cell 1. The cell identifier may include one or more of the following: a cell global identifier (cell global identifier, CGI), a physical cell identifier (physical cell identifier, PCI), a new radio cell global identifier (new radio cell global identifier, NCGI), a logical cell identifier, and the like. In this embodiment of this application, an example in which the cell identifier is a PCI is used.

In an implementation, the target DU activates one cell in at least one cell managed by the target DU, and uses the activated cell as a cell corresponding to a cell in the source DU whose cell identifier has been updated due to a cell identifier conflict. Optionally, the source DU may further deactivate the conflicting cell. For example, PCI#1 of the cell 1 of the source DU is the same as PCI#1 of the neighboring cell (the cell 3). To avoid or reduce a PCI conflict, the target DU activates a cell 2 with PCI#2 managed by the target DU, and uses the cell 2 as a cell corresponding to the cell 1 whose PCI has been updated. A PCI of the cell is PCI#2. The source DU may deactivate the cell 1 after the cell 2 is activated. In this manner, one conflicting cell is used as an example. In actual application, there may be a plurality of conflicting cells, and the mIAB node may trigger an update of a cell identifier of each conflicting cell.

500-b: The source DU sends a neighboring cell measurement report of the UE to the CU 3. Correspondingly, the CU 3 receives the neighboring cell measurement report from the source DU.

The UE sends, to the source DU, a neighboring cell measurement report obtained by measuring a neighboring cell by the UE, and the source DU sends the neighboring cell measurement report to the CU 3. The neighboring cell measurement report includes a cell identifier of at least one neighboring cell, cell signal quality of the at least one neighboring cell, and beam measurement information of the at least one neighboring cell. Beam measurement information of a neighboring cell includes a beam identifier of at least one beam and signal quality of the at least one beam. The cell signal quality may be one or more of the following: RSRP, RSRQ, a SINR, an RSSI, and the like.

For example, the source DU includes the neighboring cell measurement report in an RRC message, for example, in an RRC container, and sends the RRC message to the CU 3 by using F1AP signaling. The F1AP signaling may be, for example, uplink RRC message transfer (that is, UL RRC Message Transfer) signaling.

500-c: The source DU sends first information to the CU 3. Correspondingly, the CU 3 receives the first information from the source DU. The first information includes a first cell identifier and a second cell identifier, and there is a correspondence between the first cell identifier and the second cell identifier.

The first cell identifier is a cell identifier of a cell before the cell identifier is updated, in other words, a cell identifier of the cell of the source DU before step 500-a is performed. The second cell identifier is a cell identifier obtained after the cell identifier is updated, in other words, a cell identifier corresponding to the cell that is of the source DU and whose cell identifier is updated after step 500-a is performed. The first cell identifier may include one or more cell identifiers, and the second cell identifier may include one or more cell identifiers. For example, a correspondence between the first cell identifier and the second cell identifier may be shown in Table 1.

**Table 1**

| First cell identifier | Second cell identifier |
|---|---|
| PCI#1 | PCI#4 |
| PCI#2 | PCI#5 |
| PCI#3 | PCI#6 |

Step 500-c is an implementation. To be specific, the source DU sends the first cell identifier and the second cell identifier to the CU 3, and may explicitly or implicitly send the first cell identifier and the second cell identifier to the CU 3 by using F1AP signaling. In another implementation, after the source DU updates a cell identifier, the CU 3 may learn, through F1 interface, of cell identifiers before and after the update and a correspondence between the cell identifiers before and after the update.

Optionally, step 500-c may alternatively be performed by the target DU, to be specific, the target DU sends the first information to the CU 3.

A sequence of performing step 500-b and step 500-c is not limited in this embodiment of this application. For example, step 500-b may be performed before step 500-c, or step 500-c may be performed before step 500-b, or the two steps are performed simultaneously.

500-d: The CU 3 determines, based on the first information, that the UE needs to perform the random access channel-less handover procedure.

The CU 3 determines, based on the received first information and the neighboring cell measurement report, whether a source cell and a target cell of the UE are cells of the same mIAB node. When it is determined that the source cell and the target cell are cells of the same mIAB node, it is determined that the UE needs to perform the random access channel-less handover procedure.

Before determining whether the source cell and the target cell are cells of the same mIAB node, the target cell and a cell identifier of the target cell are determined.

In an implementation, the CU 3 determines, based on the neighboring cell measurement report, the cell identifier of the target cell and the target cell from the at least one neighboring cell. The CU 3 determines the target cell from the at least one neighboring cell based on the neighboring cell measurement report. For example, the CU 3 selects, from the at least one neighboring cell, a cell with better cell signal quality as the target cell, or selects a cell with better load balancing as the target cell, or selects a cell with better cell signal quality and better load balancing as the target cell.

In another implementation, the CU 3 selects at least one candidate neighboring cell from the at least one neighboring cell based on the first information, where both a cell identifier of the candidate neighboring cell and a cell identifier of the source cell are in the first information; and determines the cell identifier of the target cell and the target cell from the at least one candidate neighboring cell. To be specific, the CU 3 selects, from the at least one neighboring cell based on the cell identifier in the first information and the cell identifier of the at least one neighboring cell, a candidate neighboring cell whose cell identifier is in the first information. The target cell is determined from the at least one candidate neighboring cell, for example, a candidate neighboring cell with better cell signal quality from the at least one candidate neighboring cell is selected as the target cell, or a candidate neighboring cell with better load balancing is selected as the target cell, or a candidate neighboring cell with better cell signal quality and load balancing is selected as the target cell. If there is one candidate neighboring cell, the candidate neighboring cell is the target cell.

After determining the target cell and the cell identifier of the target cell, the CU 3 determines whether the cell identifier of the source cell and the cell identifier of the target cell are in the first information; and determines, if the cell identifier of the source cell and the cell identifier of the target cell are in the first information, that the source cell and the target cell are cells of the same mIAB node; or determines, if the cell identifier of the source cell and/or the cell identifier of the target cell are/is not in the first information, that the source cell and the target cell are not cells of the same mIAB node. The CU 3 may learn of the cell identifier of the source cell of the UE from the source DU through the F1 interface. For determining whether the cell identifier of the source cell and the cell identifier of the target cell are in the first information, for example, determining whether a PCI of the source cell is in Table 1 and whether a PCI of the target cell is in Table 1, the PCI of the source cell and the PCI of the target cell may be PCIs in a row of Table 1; or the PCI of the source cell is a PCI in a 1^{st} column of Table 1, and the PCI of the target cell is a PCI in a 2^{nd} column of Table 1; or the PCI of the source cell is a PCI in the 2^{nd} column of Table 1, and the PCI of the target cell is a PCI in the 1^{st} column of Table 1. The cell identifier of the source cell may have a correspondence with the cell identifier of the target cell, or may not have a correspondence, depending on a specific situation.

When it is determined that the source cell and the target cell are cells of the same mIAB node, the CU 3 determines that the UE needs to perform the random access channel-less handover procedure, and may further perform Manner 1 or Manner 2 in the embodiment shown in FIG. 5, to reduce handover interruption time. When it is determined that the source cell and/or the target cell are not cells of the same mIAB node, the CU 3 determines that the UE needs to perform a random access handover procedure.

In the embodiment shown in FIG. 5A, after updating the cell identifier, the source DU sends, to the CU 3, the first information indicating the first cell identifier and the second cell identifier. The CU 3 may determine, based on the first information, whether the UE needs to perform the random access channel-less handover procedure, and perform, if the UE needs to perform the random access channel-less handover procedure, Manner 1 or Manner 2 in the embodiment shown in FIG. 5, to reduce handover interruption time.

In embodiments shown in FIG. 5 and/or FIG. 5A, the CU 3 obtains the neighboring cell measurement report of the UE. If the source DU does not send the neighboring cell measurement report to the CU 3, the CU 3 may select, based on the cell identifier of the source cell, a cell identifier from the second cell identifier as the cell identifier of the target cell. For example, the CU 3 selects a PCI from the PCIs shown in the 2^{nd} column in Table 1 as the PCI of the target cell. Selection may be performed based on a correspondence (for example, the correspondence as indicated by the rows in Table 1). For example, if the PCI of the source cell is PCI#1, a cell identified by PCI#4 may be selected as the target cell. Alternatively, selection may be performed not based on a correspondence. For example, if the PCI of the source cell is PCI#1, a cell identified by PCI#5 or PCI#6 may be selected as the target cell. After determining the target cell and the cell identifier of the target cell, the CU 3 may determine whether the UE needs to perform the random access channel-less handover procedure. Optionally, the CU 3 may further learn of a correspondence between a beam identifier of the source cell and a beam identifier of the target cell from the source DU and/or the target DU.

In an implementation, the CU 3 may send the correspondence between a beam identifier of the source cell and a beam identifier of the target cell to the target DU. The target DU may determine the first beam information based on the correspondence between a beam identifier of the source cell and a beam identifier of the target cell. For example, the target DU finds, based on a beam identifier of a beam used by the UE to communicate with the source cell, a beam identifier corresponding to the target cell, and includes the beam identifier in the first beam information. In this case, step 503-1 to step 505-1 may further be performed.

In another implementation, the CU 3 may determine the first beam information based on the correspondence between a beam identifier of the source cell and a beam identifier of the target cell. For example, the CU 3 finds, based on a beam identifier of a beam used by the UE to communicate with the source cell, a beam identifier corresponding to the target cell, and includes the beam identifier in the first beam information. In this case, step 502-2 to step 505-2 may further be performed.

The first beam information is beam information to be used for communication between the UE and the target cell. A beam identifier of a beam used by the UE to communicate with the source cell corresponds to the beam identifier of the target cell. This may be understood as that a beam direction of the beam used by the UE to communicate with the source cell is the same as a beam direction of a beam identified by the beam identifier of the target cell.

For example, when the CU 3 obtains the neighboring cell measurement report of the UE, the CU 3 may determine whether the UE needs to perform the random access channel-less handover procedure. When the CU 3 does not obtain the neighboring cell measurement report of the UE, the CU 3 may also determine whether the UE needs to perform the random access channel-less handover procedure.

When the CU 3 determines that the UE needs to perform the random access channel-less handover procedure, the embodiment shown in FIG. 5 may be performed. Alternatively, the CU 3 may determine the first beam information when there is no neighboring cell measurement report. When there is no neighboring cell measurement report, the first beam information may be determined in at least one of the following manners, to reduce handover interruption time and reduce power consumption of the UE.

The following describes several manners of determining the first beam information provided in this application.

Manner (1): The CU 3 obtains, from the source DU, a beam identifier of a beam used by the UE to communicate with the source cell and the correspondence between a beam identifier of the source cell and a beam identifier of the target cell. For example, the source DU may include the foregoing information in UE context setup response signaling. The CU 3 then sends the information to the target DU. For example, the CU 3 may include the information in UE context setup request signaling. The target DU may determine, based on the information, a beam identifier that is of the target cell and that corresponds to the beam identifier, to determine the first beam information. In this case, step 503-1 to step 505-1 may further be performed.

Manner (2): The CU 3 obtains, from the source DU, a beam identifier of a beam used by the UE to communicate with the source cell and the correspondence between a beam identifier of the source cell and a beam identifier of the target cell. For example, the source DU may include the foregoing information in UE context setup response signaling. The CU 3 may determine, based on the information, a beam identifier that is of the target cell and that corresponds to the beam identifier, to determine the first beam information. In this case, step 502-2 to step 505-2 may further be performed.

Manner (3): The source DU determines, based on a beam identifier of a beam used by the UE to communicate with the source cell and the correspondence between a beam identifier of the source cell and a beam identifier of the target cell, that a beam identifier that is of the target cell and that corresponds to the beam identifier, to determine the first beam information; and sends the first beam information to the CU 3. For example, the source DU may send the first beam information to the CU 3 by using UE context modification required signaling, UE context modification response signaling, or UL RRC message transfer signaling. In this case, step 502-2 to step 505-2 may further be performed.

In Manner (1) to Manner (3), it may be understood as that the source DU and the target DU do not share a network configuration, to be specific, a configuration between the source DU and the target DU is a non-network-sharing configuration. In the following Manner (4) to Manner (7), it may be understood as that the source DU and the target DU share a network configuration, to be specific, a configuration between the source DU and the target DU is a network sharing configuration. Network sharing configuration information may include one or more of information such as a correspondence between an active cell of the source DU and an active cell of the target DU, a correspondence between a beam identifier of a cell of the source DU and a beam identifier of a cell of the target DU, context information for communication between the UE and the source cell, and a beam identifier of a beam used by the UE to communicate with the source cell. The CU 3 may obtain the network sharing configuration information from the source DU or the target DU.

Manner (4): The target DU determines, based on an identifier for the UE in the source cell obtained from the CU 3, a beam identifier of a beam used by the UE to communicate with the source cell. For example, the CU 3 may send the identifier for the UE in the source cell to the target DU by using UE context setup request signaling. The target DU further determines a beam identifier that is of the target cell and that corresponds to the beam identifier, in other words, determines the first beam information. In this case, step 503-1 to step 505-1 may further be performed. The identifier for the UE in the source cell refers to an identifier allocated, after the UE accesses the source cell, for communication between the UE and the source cell. The identifier may be a combination of a cell identifier of the source cell and a cell radio network temporary identifier (cell radio network temporary identifier, C-RNTI). The cell identifier may be a PCI, an NCGI, or the like. The C-RNTI may be allocated by the source DU to the UE after the UE accesses the source cell. The identifier may alternatively be a combination of an identifier of a gNB to which the source cell belongs and a gNB-CU/DU UE F1AP ID. The gNB-CU/DU UE F1AP ID may be allocated by the CU 3 to the UE after the UE accesses the source cell. The identifier may alternatively be another identifier that can uniquely identify the UE in the source cell. The target DU determines, based on the identifier for the UE in the source cell and the cell identifier of the source cell, the beam identifier of the beam used by the UE to communicate with the source cell. The target DU may obtain the cell identifier of the source cell from the CU 3. For example, the CU 3 may send the cell identifier of the source cell to the target DU by using UE context setup request signaling. Alternatively, the target DU may obtain the cell identifier of the source cell through query based on the identifier for the UE in the source cell. Therefore, the target DU may determine, based on the beam identifier of the beam used by the UE to communicate with the source cell and the correspondence between a beam identifier of the source cell and a beam identifier of the target cell, the beam identifier that is of the target cell and that corresponds to the beam identifier. The target DU may obtain the correspondence between a beam identifier of the source cell and a beam identifier of the target cell by using the network sharing configuration.

Manner (5): The target DU determines, based on the cell identifier of the source cell and a beam identifier of a beam used by the UE to communicate with the source cell, a beam identifier that is of the target cell and that corresponds to the beam identifier, to determine the first beam information. In this case, step 503-1 to step 505-1 may further be performed. The target DU may obtain the cell identifier of the source cell from the CU 3. For example, the CU 3 may send the cell identifier of the source cell to the target DU by using UE context setup request signaling. Alternatively, the target DU may obtain the cell identifier of the source cell through query based on an identifier allocated to the UE by the source cell. The target DU may obtain, from the source DU, the beam identifier of the beam used by the UE to communicate with the source cell. Therefore, the target DU may determine, based on the beam identifier of the beam used by the UE to communicate with the source cell and the correspondence between a beam identifier of the source cell and a beam identifier of the target cell, the beam identifier that is of the target cell and that corresponds to the beam identifier. The target DU may obtain the correspondence between a beam identifier of the source cell and a beam identifier of the target cell by using the network sharing configuration. Optionally, the target DU may further obtain, from the source DU, a gNB-CU UE F1AP ID allocated by the CU 3 to the UE when the UE communicates with the source cell, to associate the determined first beam information with a UE context that is returned by the target DU to the CU 3. For example, the determined first beam information may be associated with UE context setup response signaling that is sent by the target DU to the CU 3.

Manner (6): The CU 3 obtains, based on the network sharing configuration information, a beam identifier of a beam used by the UE to communicate with the source cell and the correspondence between a beam identifier of the source cell and a beam identifier of the target cell. The CU 3 may determine, based on the information, a beam identifier that is of the target cell and that corresponds to the beam identifier, to determine the first beam information. In this case, step 502-2 to step 505-2 may further be performed. Optionally, the CU 3 determines, based on an identifier for the UE in the source cell and the cell identifier of the source cell, the beam identifier of the beam used by the UE to communicate with the source cell, to further determine the beam identifier that is of the target cell and that corresponds to the beam identifier. Optionally, the CU 3 determines, based on the cell identifier of the source cell and the beam identifier of the beam used by the UE to communicate with the source cell, the beam identifier that is of the target cell and that corresponds to the beam identifier.

Manner (7): The source DU determines, based on a beam identifier of a beam used by the UE to communicate with the source cell and the correspondence between a beam identifier of the source cell and a beam identifier of the target cell, a beam identifier that is of the target cell and that corresponds to the beam identifier, to determine the first beam information; and sends the first beam information to the target DU. In this case, step 503-1 to step 505-1 may further be performed. Optionally, the target DU may further obtain, from the source DU, a gNB-CU UE F1AP ID allocated by the CU 3 to the UE when the UE communicates with the source cell, to associate the determined first beam information with a UE context that is returned by the target DU to the CU 3. For example, the determined first beam information may be associated with UE context setup response signaling that is sent by the target DU to the CU 3.

In an optional embodiment, considering that the source cell and the target cell of the UE may be cells of a same DU, the target DU shown in FIG. 5 and FIG. 5A may also be considered as the source DU in this case. A difference lies in that, in FIG. 5, F1AP signaling exchanged between the target DU and the CU 3 may be UE context modification request signaling or UE context modification response signaling, and in FIG. 5A, a manner in which the mIAB node updates the cell identifier may include: In an implementation, the source DU directly changes a cell identifier that is in conflict. For example, PCI#1 of the cell 1 of the source DU is the same as PCI #1 of the neighboring cell (the cell 3). To avoid or reduce a PCI conflict, the source DU changes PCI#1 of the cell 1 to PCI#2. In another implementation, the source DU activates another cell managed by the source DU, and uses the activated cell as a cell corresponding to a cell whose cell identifier has been updated due to a conflict. Optionally, the source DU may further deactivate the conflicting cell. For example, PCI#1 of the cell 1 of the source DU is the same as PCI#1 of the neighboring cell (the cell 3). To avoid or reduce a PCI conflict, the source DU activates a cell 2 with PCI#2 managed by the source DU, and uses the cell 2 as a cell corresponding to the cell 1 whose PCI has been updated. A PCI of the cell is PCI#2. The source DU may deactivate the cell 1 after the cell 2 is activated.

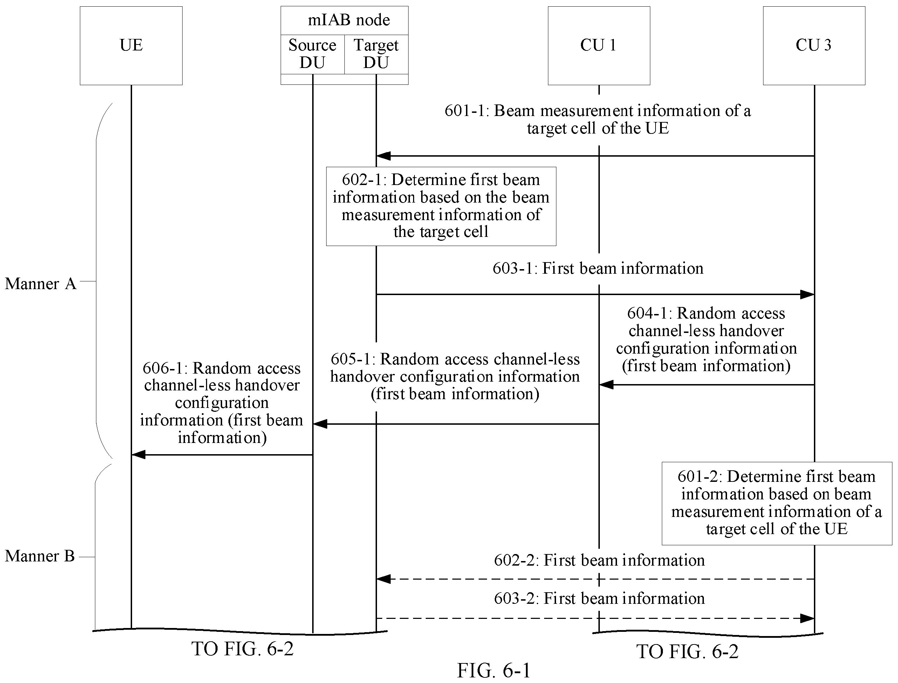

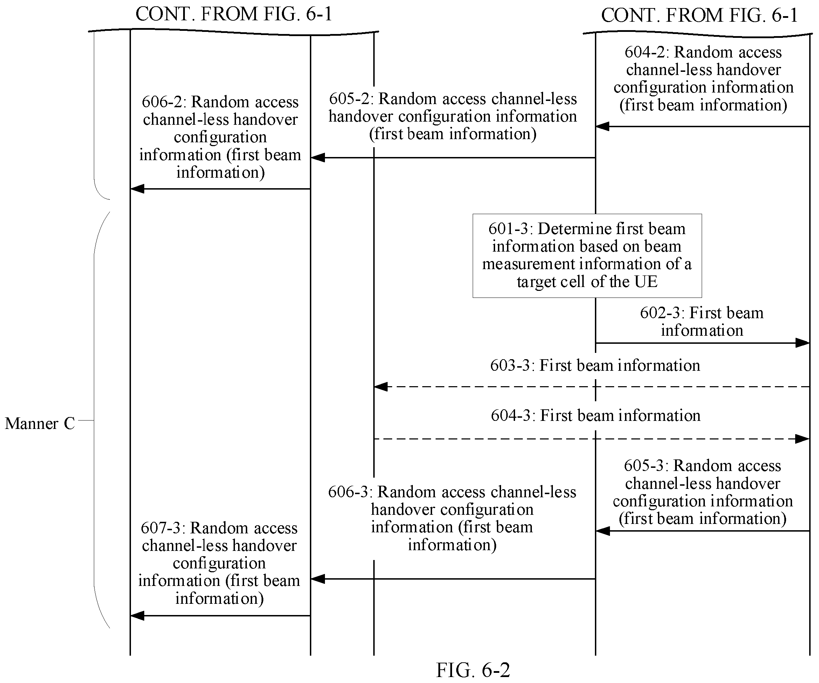

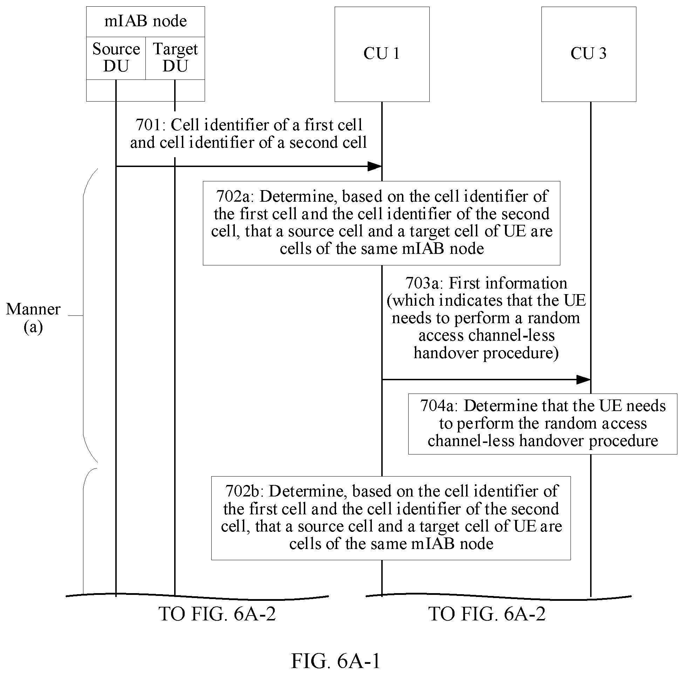

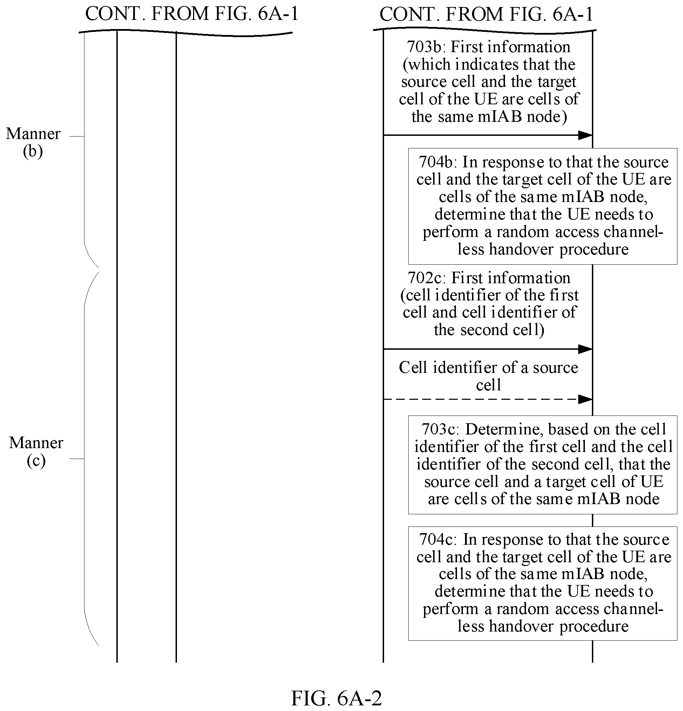

FIG. 6-1 and FIG. 6-2 are a schematic flowchart of another communication method according to an embodiment of this application. The method may include Manner A, Manner B, and Manner C, and any one of Manner A, Manner B, and Manner C may be selected. It may be understood that, in Manner A shown in step 601-1 to step 606-1, a target DU determines first beam information; in Manner B shown in step 601-2 to step 606-2, a CU 3 determines first beam information; and in Manner C shown in step 601-3 to step 607-3, a CU 1 determines first beam information. In the embodiment shown in FIG. 6-1 and FIG. 6-2, a source DU establishes an F1 connection to the CU 1. As an mIAB node moves, the mIAB node performs distributed unit migration, the target DU is activated, and the target DU establishes an F1 connection to the CU 3.

### Manner A:

601-1: The CU 3 sends beam measurement information of a target cell of UE to the target DU. Correspondingly, the target DU receives the beam measurement information of the target cell of the UE from the CU 3.

For example, the CU 3 sends the beam measurement information of the target cell to the target DU by using F1AP signaling, in other words, the F1AP signaling includes the beam measurement information of the target cell. The F1AP signaling may be, for example, UE context setup request signaling.

For the beam measurement information of the target cell and the first beam information, refer to the detailed descriptions of the beam measurement information and the first beam information in step 501-1. Details are not described herein again.

The CU 1 determines the target cell based on a neighboring cell measurement report, and notify the CU 3 of the target cell. For details, refer to the detailed descriptions of the embodiment shown in FIG. 6A-1 and FIG. 6A-2.

602-1: The target DU determines the first beam information based on the beam measurement information of the target cell. The first beam information is beam information to be used for communication between the UE and the target cell.

The target DU determines, based on the beam measurement information of the target cell, the first beam information to be used for communication between the UE and the target cell. The first beam information includes a beam identifier of a first beam. For example, if the beam measurement information of the target cell includes signal quality of each SSB from SSB#1 to SSB#4, and SSB#3 has best signal quality, a beam corresponding to SSB#3 is selected as the first beam, and the beam identifier of the first beam is SSB#3. In other words, after the UE is handed over from the source cell to the target cell, the UE may communicate with the target cell by directly using the first beam. For example, the UE may send uplink data to the target cell by using the beam corresponding to SSB#3. The UE does not need to perform measurement, and does not need to send a random access preamble to the target cell, thereby helping reduce handover interruption time.

603-1: The target DU sends the first beam information to the CU 3.

After determining the first beam information, the target DU sends the first beam information to the CU 3, so that the CU 3 generates a handover command. In an implementation, the target DU includes the first beam information in an RRC message, for example, in an RRC container, and sends the RRC message to the CU 3 by using F1AP signaling. In another implementation, the target DU sends the first beam information to the CU 3 by directly using F1AP signaling, in other words, the F1AP signaling explicitly includes the first beam information. The F1AP signaling may be, for example, UE context setup response signaling.

604-1: The CU 3 sends random access channel-less handover configuration information to the CU 1. Correspondingly, the CU 1 receives the random access channel-less handover configuration information from the CU 3. The random access channel-less handover configuration information includes the first beam information.

In an implementation, the CU 3 may send the random access channel-less handover configuration information to the CU 1 by directly using XnAP signaling, in other words, the random access channel-less handover configuration information is included in the XnAP signaling, that is, the first beam information is included in the XnAP signaling.

In another implementation, the CU 3 includes the random access channel-less handover configuration information in an RRC message, for example, in an RRC container, and sends the RRC message to the CU 1 by using XnAP signaling.

The XnAP signaling may be, for example, handover request acknowledgment (that is, HO Request Acknowledge) signaling.

605-1: The CU 1 sends the random access channel-less handover configuration information to the source DU. Correspondingly, the source DU receives the random access channel-less handover configuration information from the CU 1.

606-1: The source DU sends the random access channel-less handover configuration information to the UE. Correspondingly, the UE receives the random access channel-less handover configuration information from the source DU.

For implementation processes of step 605-1 and step 606-1, refer to the detailed descriptions of step 504-1 and step 505-1. Details are not described herein again. A difference lies in that, in step 504-1 and step 505-1, the CU 3 sends the random access channel-less handover configuration information to the UE via the source DU, and in step 605-1 and step 606-1, the CU 1 sends the random access channel-less handover configuration information to the UE via the source DU.

### Manner B:

601-2: The CU 3 determines the first beam information based on beam measurement information of a target cell of the UE. The first beam information is beam information to be used for communication between the UE and the target cell.

The CU 1 determines the target cell based on a neighboring cell measurement report, and notify the CU 3 of the target cell. For details, refer to the detailed descriptions of the embodiment shown in FIG. 6A-1 and FIG. 6A-2.

Optionally, in 602-2, the CU 3 sends the first beam information to the target DU. Correspondingly, the target DU receives the first beam information from the CU 3.

Optionally, in 603-2, the target DU sends the first beam information to the CU 3. Correspondingly, the CU 3 receives the first beam information from the target DU.

For implementation processes of step 601-2 to step 603-2, refer to the detailed descriptions of step 501-2 to step 503-2. Details are not described herein again.

604-2: The CU 3 sends random access channel-less handover configuration information to the CU 1. Correspondingly, the CU 1 receives the random access channel-less handover configuration information from the CU 3. The random access channel-less handover configuration information includes the first beam information.

In an implementation, the CU 3 may send the random access channel-less handover configuration information to the CU 1 by directly using XnAP signaling, in other words, the random access channel-less handover configuration information is included in the XnAP signaling, that is, the first beam information is included in the XnAP signaling.

In another implementation, the CU 3 includes the random access channel-less handover configuration information in an RRC message, for example, in an RRC container, and sends the RRC message to the CU 1 by using XnAP signaling.

The XnAP signaling may be, for example, HO request acknowledge signaling.

605-2: The CU 1 sends the random access channel-less handover configuration information to the source DU. Correspondingly, the source DU receives the random access channel-less handover configuration information from the CU 1.

606-2: The source DU sends the random access channel-less handover configuration information to the UE. Correspondingly, the UE receives the random access channel-less handover configuration information from the source DU.

For implementation processes of step 605-2 and step 606-2, refer to the detailed descriptions of step 504-1 and step 505-1. Details are not described herein again. A difference lies in that, in step 504-1 and step 505-1, the CU 3 sends the random access channel-less handover configuration information to the UE via the source DU, and in step 605-2 and step 606-2, the CU 1 sends the random access channel-less handover configuration information to the UE via the source DU.

### Manner C:

601-3: The CU 1 determines the first beam information based on beam measurement information of a target cell of the UE. The first beam information is beam information to be used for communication between the UE and the target cell.

For the beam measurement information of the target cell and the first beam information, refer to the detailed descriptions of the beam measurement information and the first beam information in step 501-1. Details are not described herein again. For a process in which the CU 1 determines the first beam information, refer to a process in which the target DU determines the first beam information.

The target cell may be determined by the CU 1 based on a neighboring cell measurement report, and the CU 1 may notify the CU 3 of a cell identifier of the target cell. For details, refer to the detailed descriptions of the embodiment shown in FIG. 6A-1 and FIG. 6A-2.

Optionally, when determining that the UE needs to perform a random access channel-less handover procedure, the CU 3 sends indication information to the CU 1 by using XnAP signaling, to indicate the CU 1 to determine the first beam information.

602-3: The CU 1 sends the first beam information to the CU 3. Correspondingly, the CU 3 receives the first beam information from the CU 1.

The CU 1 sends the first beam information to the CU 3 by using XnAP signaling. The XnAP signaling may be, for example, handover request (that is, HO Request) signaling.

Optionally, in 603-3, the CU 3 sends the first beam information to the target DU. Correspondingly, the target DU receives the first beam information from the CU 3.

Optionally, in 604-3, the target DU sends the first beam information to the CU 3. Correspondingly, the CU 3 receives the first beam information from the target DU.

For implementation processes of step 603-3 and step 604-3, refer to the detailed descriptions of step 502-2 and step 503-2. Details are not described herein again.

605-3: The CU 3 sends random access channel-less handover configuration information to the CU 1. Correspondingly, the CU 1 receives the random access channel-less handover configuration information from the CU 3. The random access channel-less handover configuration information includes the first beam information.

In an implementation, the CU 3 may send the random access channel-less handover configuration information to the CU 1 by directly using XnAP signaling, in other words, the random access channel-less handover configuration information is included in the XnAP signaling, that is, the first beam information is included in the XnAP signaling.

In another implementation, the CU 3 includes the random access channel-less handover configuration information in an RRC message, for example, in an RRC container, and sends the RRC message to the CU 1 by using XnAP signaling.

The XnAP signaling may be, for example, HO request acknowledge signaling.

606-3: The CU 1 sends the random access channel-less handover configuration information to the source DU. Correspondingly, the source DU receives the random access channel-less handover configuration information from the CU 1.

607-3: The source DU sends the random access channel-less handover configuration information to the UE. Correspondingly, the UE receives the random access channel-less handover configuration information from the source DU.

For implementation processes of step 606-3 and step 607-3, refer to the detailed descriptions of step 504-1 and step 505-1. Details are not described herein again. A difference lies in that, in step 504-1 and step 505-1, the CU 3 sends the random access channel-less handover configuration information to the UE via the source DU, and in step 606-3 and step 607-3, the CU 1 sends the random access channel-less handover configuration information to the UE via the source DU.

In Manner A, Manner B, and Manner C in the embodiment shown in FIG. 6-1 and FIG. 6-2, the UE may directly communicate with the target cell based on the first beam information, without performing a random access procedure (including beam selection), to access the target cell. This can reduce handover interruption time during a handover from the source cell to the target cell, and help improve communication performance of the terminal device.

FIG. 6A-1 and FIG. 6A-2 are another schematic flowchart of determining that UE needs to perform a random access channel-less handover procedure according to an embodiment of this application. The procedure may include but is not limited to the following steps.

701: A source DU sends a cell identifier of a first cell and a cell identifier of a second cell to a CU 1. Correspondingly, the CU 1 receives the cell identifier of the first cell and the cell identifier of the second cell from the source DU. There is a correspondence between the cell identifier of the first cell and the cell identifier of the second cell.

The first cell is a cell managed and activated by the source DU, to be specific, a cell activated when the source DU establishes an F1 connection to the CU 1. The second cell is a cell managed and activated by the target DU, to be specific, a cell activated when the target DU establishes an F1 connection to a CU 3. There may be one or more first cells and second cells. The correspondence between the cell identifier of the first cell and the cell identifier of the second cell is for describing a correspondence between a cell activated by the source DU and a cell activated by the target DU.

The source DU may send the cell identifier of the first cell and the cell identifier of the second cell to the CU 1 by using the F1 connection to the CU 1.

Optionally, the source DU may further send a cell identifier of a source cell of the UE to the CU 1 by using the F1 connection to the CU 1. A sequence of sending the cell identifier of the source cell and performing step 701 is not limited in this embodiment of this application.

Optionally, the source DU may further send a neighboring cell measurement report of the UE to the CU 1 by using the F1 connection to the CU 1. A sequence of sending the cell identifier of the source cell, sending the neighboring cell measurement report of the UE, and performing step 701 is not limited in this embodiment of this application.

### Manner (a):

702a: The CU 1 determines, based on the cell identifier of the first cell and the cell identifier of the second cell, that the source cell and a target cell of the UE are cells of a same mIAB node.

Before determining that the source cell and the target cell of the UE are cells of the same mIAB node, the CU 1 determines the target cell and a cell identifier of the target cell.

In an implementation, the CU 1 determines, based on the neighboring cell measurement report, the cell identifier of the target cell and the target cell from at least one neighboring cell.

In another implementation, the CU 1 selects at least one candidate neighboring cell from at least one neighboring cell based on the cell identifier of the first cell and the cell identifier of the second cell, where a cell identifier of the candidate neighboring cell and the cell identifier of the source cell are in the cell identifier of the first cell and/or the cell identifier of the second cell; and determines the cell identifier of the target cell and the target cell from the at least one candidate neighboring cell.

After determining the target cell and the cell identifier of the target cell, the CU 1 determines whether the cell identifier of the source cell and the cell identifier of the target cell are in the cell identifier of the first cell and the cell identifier of the second cell. If the cell identifier of the source cell and the cell identifier of the target cell are in the cell identifier of the first cell and the cell identifier of the second cell, the CU 1 determines that the source cell and the target cell are cells of the same mIAB node; otherwise, the CU 1 determines that the source cell and the target cell are not cells of the same mIAB node.

703a: The CU 1 sends first information to the CU 3. Correspondingly, the CU 3 receives the first information from the CU 1. The first information indicates that the UE needs to perform the random access channel-less handover procedure.

After determining that the source cell and the target cell of the UE are cells of the same mIAB node, the CU 1 sends the first information to the CU 3. The CU 1 may send the first information to the CU 3 by directly using XnAP signaling. The XnAP signaling may be, for example, HO request signaling.

Optionally, the first information further includes TA indication information (that is, same-TA indication information), indicating the UE to perform uplink synchronization with the target cell based on a TA of the source cell. Optionally, the first information may be TA indication information (that is, same-TA indication information). In other words, the TA indication information not only indicates the UE to perform uplink synchronization with the target cell based on the TA of the source cell, but also indicates that the UE needs to perform the random access channel-less handover procedure. It may be understood that the TA indication information may implicitly indicate that the UE needs to perform the random access channel-less handover procedure.

Optionally, the first information further includes beam measurement information of the target cell. For example, the CU 1 may include the beam measurement information of the target cell in an RRC message.

Optionally, the first information further includes first beam information determined by the CU 1. For example, the CU 1 may include the first beam information in an RRC message.

704a: The CU 3 determines that the UE needs to perform the random access channel-less handover procedure.

The CU 3 may determine, based on the received first information indicating that the UE needs to perform the random access channel-less handover procedure, that the UE needs to perform the random access channel-less handover procedure. Understandably, that the UE needs to perform the random access channel-less handover procedure as indicated by the first information is a suggestion from the CU 1, and the CU 3 may accept or reject the suggestion. If the CU 3 accepts the suggestion, it is determined that the UE needs to perform the random access channel-less handover procedure; or if the CU 3 rejects the suggestion, it is determined that the UE needs to perform a procedure that is not random access channel-less handover procedure.

### Manner (b):

702b: The CU 1 determines, based on the cell identifier of the first cell and the cell identifier of the second cell, that the source cell and a target cell of the UE are cells of a same mIAB node.

For an implementation process of step 702b, refer to the detailed descriptions of step 702a. Details are not described herein again.

703b: The CU 1 sends first information to the CU 3. Correspondingly, the CU 3 receives the first information from the CU 1. The first information indicates that the source cell and the target cell of the UE are cells of the same mIAB node.

After determining that the source cell and the target cell of the UE are cells of the same mIAB node, the CU 1 sends the first information to the CU 3. The CU 1 may send the first information to the CU 3 by directly using XnAP signaling. The XnAP signaling may be, for example, HO request signaling.

Optionally, the first information further includes TA indication information, indicating the UE to perform uplink synchronization with the target cell based on a TA of the source cell. Optionally, the first information may be TA indication information, and may implicitly indicate that the source cell and the target cell of the UE are cells of the same mIAB node.

704b: In response to that the source cell and the target cell of the UE are cells of the same mIAB node, the CU 3 determines that the UE needs to perform the random access channel-less handover procedure.

It may be understood that the CU 1 directly notifies the CU 3 that the source cell and the target cell of the UE are cells of the same mIAB node, so that the CU 3 can directly determine that the UE needs to perform the random access channel-less handover procedure.

### Manner (c):

702c: The CU 1 sends first information to the CU 3. Correspondingly, the CU 3 receives the first information from the CU 1.

The first information indicates the cell identifier of the first cell and the cell identifier of the second cell. There is a correspondence between the cell identifier of the first cell and the cell identifier of the second cell.

Optionally, the CU 1 further sends a cell identifier of the source cell to the CU 3. For example, the CU 1 first sends the first information to the CU 3, for example, sends the first information to the CU 3 by using Xn setup request (that is, Xn Setup Request)/next generation radio access network (next generation radio access network, NG-RAN) node configuration update (that is, NG-RAN node Configuration Update) signaling, and then sends the cell identifier of the source cell to the CU 3, for example, sends the cell identifier of the source cell to the CU 3 by using HO request signaling. For example, the CU 1 sends the cell identifier of the source cell and a part of the first information to the CU 3, for example, sends the cell identifier of the source cell and the part of the first information to the CU 3 by using HO request signaling, where the part of the first information at least includes the cell identifier that is of the second cell and that corresponds to the source cell.

Optionally, the CU 1 further sends a cell identifier of a target cell to the CU 3. For a process in which the CU 1 determines the target cell, refer to the detailed descriptions of step 702a. Details are not described herein again. The cell identifier of the target cell may be carried in the first information, or may not be carried in the first information.

Optionally, the CU 1 further sends beam measurement information of the target cell to the CU 3. The beam measurement information may be carried in the first information, or may not be carried in the first information.

Optionally, the CU 1 further sends first beam information to the CU 3.

703c: The CU 3 determines, based on the cell identifier of the first cell and the cell identifier of the second cell, that the source cell and the target cell of the UE are cells of the same mIAB node.

Step 703c is similar to step 702b. A difference lies in that one step is performed by the CU 1 and the other step is performed by the CU 3. For details, refer to the detailed descriptions of step 702b. Details are not described herein again.

704c: In response to that the source cell and the target cell of the UE are cells of the same mIAB node, the CU 3 determines that the UE needs to perform the random access channel-less handover procedure.

In the embodiment shown in FIG. 6A-1 and FIG. 6A-2, the CU 3 may determine, based on the first information, that the UE needs to perform the random access channel-less handover procedure, and perform Manner A, Manner B, or Manner C in the embodiment shown in FIG. 6-1 and FIG. 6-2, to reduce handover interruption time.

FIG. 6B is another schematic flowchart of determining that UE needs to perform a random access channel-less handover procedure according to an embodiment of this application. The procedure may include but is not limited to the following steps.

701d: A target DU sends first information to a CU 3. Correspondingly, the CU 3 receives the first information from the target DU. The first information indicates cell information of a first cell.

The cell information of the first cell includes a cell identifier, and may further include a carrier identifier, a tracking area code (tracking area code, TAC), a radio access network area code (radio access network area code, RANAC), and the like. The first cell is a cell managed and activated by a source DU, to be specific, a cell activated when the source DU establishes an F1 connection to a CU 1. The target DU may obtain the cell information of the first cell from the source DU.

The target DU may send the cell information of the first cell to the CU 3 by using an F1 connection to the CU 3.

Optionally, the CU 3 obtains a cell identifier of a source cell of the UE from the CU 1.

Optionally, the CU 3 further obtains a cell identifier of a target cell of the UE from the CU 1. Obtaining the cell identifier of the target cell and obtaining the cell identifier of the source cell may be performed simultaneously, or obtaining the cell identifier of the source cell may be performed first, and then obtaining the cell identifier of the target cell is performed.

702d: The CU 3 determines, based on the cell information of the first cell, that the source cell and the target cell of the UE are cells of a same mIAB node.

The CU 3 receiving the cell information of the first cell from the target DU indicates that there is a correspondence between the first cell and the target DU. If the cell identifier of the source cell is in the cell information of the first cell, there is a correspondence between the source cell and the target DU. If there is a correspondence between the source cell and the target DU, and the cell identifier of the target cell is in cell information of a second cell, the CU 3 may determine that there is a correspondence between the source cell and the target cell, in other words, the source cell and the target cell are cells of the same mIAB node. The second cell is a cell managed and activated by the target DU, to be specific, a cell activated when the target DU establishes an F1 connection to the CU 3.

703d: In response to that the source cell and the target cell of the UE are cells of the same mIAB node, the CU 3 determines that the UE needs to perform the random access channel-less handover procedure.

In the embodiment shown in FIG. 6B, the CU 3 may determine, based on the cell information of the first cell, that the UE needs to perform the random access channel-less handover procedure, and perform Manner A, Manner B, or Manner C in the embodiment shown in FIG. 6-1 and FIG. 6-2, to reduce handover interruption time.

In an optional embodiment, the first information may indicate a cell identifier of the first cell and a cell identifier of the second cell. There is a correspondence between the cell identifier of the first cell and the cell identifier of the second cell. The target DU may send the cell identifier of the first cell and the cell identifier of the second cell to the CU 3, so that the CU 3 can determine, based on the cell identifier of the first cell and the cell identifier of the second cell, that the source cell and the target cell of the UE are cells of the same mIAB node, and further determine that the UE needs to perform the random access channel-less handover procedure. For a process in which the CU 3 determines, based on the cell identifier of the first cell and the cell identifier of the second cell, that the source cell and the target cell of the UE are cells of the same mIAB node, refer to the detailed descriptions of step 703c. Details are not described herein again.

In an optional embodiment, when the source DU and the target DU share a network configuration, the CU 3 may further determine the cell identifier of the source cell of the UE based on an identifier for the UE in the source cell and network sharing configuration information that is obtained from the target DU, for example, context information for communication between the UE and the source cell. For example, the target DU may send the network sharing configuration information to the CU 3 by using F1 setup request (that is, F1 Setup Request) signaling. Then, the CU 3 determines, based on the cell identifier of the first cell and the cell identifier of the second cell, whether the source cell and the target cell of the UE are cells of the same mIAB node. The identifier for the UE in the source cell may be sent by the CU 1 to the CU 3. For example, the CU 1 may send the cell identifier of the source cell to the CU 3 by using HO request signaling. Alternatively, the CU 3 further sends, to the target DU, an identifier for the UE in the source cell obtained from the CU 1 and an identifier of the target cell. The target DU determines the cell identifier of the source cell of the UE based on the network sharing configuration information; determines, based on a correspondence between an active cell of the source DU and an active cell of the target DU (to be specific, a correspondence between the first cell and the second cell), whether the source cell and the target cell of the UE are cells of the same mIAB node; and then notifies the CU 3 of a determining result. For example, the determining result may be sent to the CU 3 by including the determining result in UE context setup response signaling.

In at least one of the embodiment shown in FIG. 6-1 and FIG. 6-2, the embodiment shown in FIG. 6A-1 and FIG. 6A-2, or the embodiment shown in FIG. 6B, the CU 1 obtains a neighboring cell measurement report of the UE. If the source DU does not send the neighboring cell measurement report to the CU 1, the CU 3 and the target DU do not obtain the neighboring cell measurement report either. The CU 1 may select one cell from the second cell as the target cell based on the cell identifier of the source cell, in other words, select one cell from cells of the target DU as the target cell. After determining the target cell and the cell identifier of the target cell, the CU 1 may determine whether the UE needs to perform the random access channel-less handover procedure. In an implementation, the CU 1 may further learn of a correspondence between a beam identifier of the source cell and a beam identifier of the target cell from the source DU and/or the target DU.

In Manner A, the CU 1 may further send the correspondence between a beam identifier of the source cell and a beam identifier of the target cell to the CU 3, and the CU 3 sends the correspondence to the target DU. The target DU determines the first beam information based on the correspondence. For example, the target DU selects, based on a beam identifier of a beam used by the UE to communicate with the source cell, a beam identifier corresponding to the target cell, and includes the beam identifier in the first beam information. In this case, step 603-1 to step 606-1 may further be performed.

In Manner B, the CU 1 may further send the correspondence between a beam identifier of the source cell and a beam identifier of the target cell to the CU 3, and the CU 3 determines the first beam information based on the correspondence. In this case, step 602-2 to step 606-2 may further be performed.

In Manner C, the CU 1 determines the first beam information based on the correspondence between the beam identifier of the source cell and the beam identifier of the target cell. In this case, step 602-3 to step 607-3 may further be performed.

In another implementation, the target DU may further send the correspondence between a beam identifier of the source cell and a beam identifier of the target cell to the CU 3, and the CU 3 determines the first beam information based on the correspondence. In this case, step 602-2 to step 606-2 may further be performed Alternatively, the target DU may further determine the first beam information based on the correspondence. In this case, step 603-1 to step 606-1 may further be performed.

The first beam information is beam information to be used for communication between the UE and the target cell. A beam identifier of a beam used by the UE to communicate with the source cell corresponds to a beam identifier of the target cell. This may be understood as that a beam direction of the beam used by the UE to communicate with the source cell is the same as a beam direction of a beam identified by the beam identifier of the target cell.

For example, when the CU 1 obtains the neighboring cell measurement report of the UE, the CU 1 may determine whether the UE needs to perform the random access channel-less handover procedure. When the CU 1 does not obtain the neighboring cell measurement report of the UE, the CU 1 may also determine whether the UE needs to perform the random access channel-less handover procedure.

When the CU 1 determines that the UE needs to perform the random access channel-less handover procedure, the embodiment shown in FIG. 6-1 and FIG. 6-2 may be performed. Alternatively, the CU 1 may determine the first beam information when there is no neighboring cell measurement report. When there is no neighboring cell measurement report, the first beam information may be determined in at least one of the following manners, to reduce handover interruption time and reduce power consumption of the UE.

The following describes several manners of determining the first beam information provided in this application.

Manner (I): The CU 1 may further obtain, from the source DU, a beam identifier of a beam used by the UE to communicate with the source cell and the correspondence between a beam identifier of the source cell and a beam identifier of the target cell. For example, the source DU may include the foregoing information in UE context setup response signaling.

In Manner A, the CU 1 may further send, to the CU 3, the beam identifier of the beam used by the UE to communicate with the source cell and the correspondence between a beam identifier of the source cell and a beam identifier of the target cell. For example, the CU 1 may include the foregoing information in HO request signaling. The CU 3 then sends the information to the target DU. For example, the CU 3 may include the information in UE context setup request signaling. The target DU determines the first beam information based on the correspondence and the beam identifier of the beam used by the UE to communicate with the source cell. For example, the target DU selects, based on the beam identifier of the beam used by the UE to communicate with the source cell, a beam identifier corresponding to the target cell, and includes the beam identifier in the first beam information. In this case, step 603-1 to step 606-1 may further be performed.

In Manner B, the CU 1 may further send, to the CU 3, the beam identifier of the beam used by the UE to communicate with the source cell and the correspondence between a beam identifier of the source cell and a beam identifier of the target cell. For example, the CU 1 may include the foregoing information in HO request signaling. The CU 3 determines the first beam information based on the correspondence and the beam identifier of the beam used by the UE to communicate with the source cell. In this case, step 602-2 to step 606-2 may further be performed.

In Manner C, the CU 1 determines the first beam information based on the beam identifier of the beam used by the UE to communicate with the source cell and the correspondence between a beam identifier of the source cell and a beam identifier of the target cell. In this case, step 602-3 to step 607-3 may further be performed.

Manner (II): The source DU determines, based on a beam identifier of a beam used by the UE to communicate with the source cell and the correspondence between a beam identifier of the source cell and a beam identifier of the target cell, a beam identifier that is of the target cell and that corresponds to the beam identifier, to determine the first beam information; and sends the first beam information to the CU 1. For example, the source DU may send the first beam information to the CU 1 by using UE context modification required signaling, UE context modification response signaling, or UL RRC message transfer signaling. In this case, step 602-3 to step 607-3 may further be performed.

In Manner (I) and Manner (II), it may be understood as that the source DU and the target DU do not share a network configuration. In the following Manner (III) to Manner (VII), it may be understood as that the source DU and the target DU share a network configuration.

Manner (III): The target DU determines, based on an identifier for the UE in the source cell obtained from the CU 3 (where the CU 3 obtains the identifier from the CU 1, for example, by using HO request signaling), a beam identifier of a beam used by the UE to communicate with the source cell, to further determine a beam identifier that is of the target cell and that corresponds to the beam identifier, in other words, to determine the first beam information. In this case, step 603-1 to step 606-1 may further be performed. The target DU determines, based on the identifier for the UE in the source cell and the cell identifier of the source cell, the beam identifier of the beam used by the UE to communicate with the source cell. The target DU may obtain the cell identifier of the source cell from the CU 3 (where the CU 3 obtains the cell identifier from the CU 1). Alternatively, the target DU may obtain the cell identifier of the source cell through query based on an identifier allocated to the UE by the source cell. Therefore, the target DU may determine, based on the beam identifier of the beam used by the UE to communicate with the source cell and the correspondence between a beam identifier of the source cell and a beam identifier of the target cell, the beam identifier that is of the target cell and that corresponds to the beam identifier. The target DU may obtain the correspondence between a beam identifier of the source cell and a beam identifier of the target cell by using the network sharing configuration.

Manner (IV): The target DU determines, based on the cell identifier of the source cell and a beam identifier of a beam used by the UE to communicate with the source cell, a beam identifier that is of the target cell and that corresponds to the beam identifier, to determine the first beam information. In this case, step 603-1 to step 606-1 may further be performed. The target DU may obtain the cell identifier of the source cell from the CU 3 (where the CU 3 obtains the cell identifier from the CU 1, for example, by using HO request signaling). For example, the CU 3 may send the cell identifier of the source cell to the target DU by using UE context setup request signaling. Alternatively, the target DU may obtain the cell identifier of the source cell through query based on an identifier allocated to the UE by the source cell. The target DU may obtain, from the source DU, the beam identifier of the beam used by the UE to communicate with the source cell. Therefore, the target DU may determine, based on the beam identifier of the beam used by the UE to communicate with the source cell and the correspondence between a beam identifier of the source cell and a beam identifier of the target cell, a beam identifier that is of the target cell and that corresponds to the beam identifier. The target DU may obtain the correspondence between a beam identifier of the source cell and a beam identifier of the target cell by using the network sharing configuration. Optionally, the target DU may further obtain, from the source DU, a NG-RAN node UE XnAP ID allocated by the CU 1 to the UE when the UE communicates with the source cell, to associate the determined first beam information with a UE context that is returned by the target DU to the CU 3. For example, the determined first beam information may be associated with UE context setup response signaling that is sent by the target DU to the CU 3.

Manner (V): The CU 1 obtains, based on the network sharing configuration information, a beam identifier of a beam used by the UE to communicate with the source cell and the correspondence between a beam identifier of the source cell and a beam identifier of the target cell; and sends the information to the CU 3. The CU 3 determines the first beam information based on the correspondence and the beam identifier of the beam used by the UE to communicate with the source cell. In this case, step 602-2 to step 606-2 may further be performed. Optionally, the CU 3 obtains, from the CU 1, an identifier for the UE in the source cell and the cell identifier of the source cell, and determines, based on the information, the beam identifier of the beam used by the UE to communicate with the source cell, to further determine a beam identifier that is of the target cell and that corresponds to the beam identifier. Optionally, the CU 3 obtains, from the CU 1, the cell identifier of the source cell and the beam identifier of the beam used by the UE to communicate with the source cell, and determines, based on the information, a beam identifier that is of the target cell and that corresponds to the beam identifier.

Manner (VI): The CU 1 obtains, based on the network sharing configuration information, a beam identifier of a beam used by the UE to communicate with the source cell and the correspondence between a beam identifier of the source cell and a beam identifier of the target cell; and determines the first beam information based on the information. In this case, step 602-3 to step 607-3 may further be performed. Optionally, the CU 1 determines, based on an identifier for the UE in the source cell and the cell identifier of the source cell, a beam identifier of a beam used by the UE to communicate with the source cell, to further determine a beam identifier that is of the target cell and that corresponds to the beam identifier. Optionally, the CU 1 determines, based on the cell identifier of the source cell and a beam identifier of a beam used by the UE to communicate with the source cell, a beam identifier that is of the target cell and that corresponds to the beam identifier.

Manner (VII): The source DU determines, based on a beam identifier of a beam used by the UE to communicate with the source cell and the correspondence between a beam identifier of the source cell and a beam identifier of the target cell, a beam identifier that is of the target cell and that corresponds to the beam identifier; and sends the beam identifier of the target cell to the target DU. In this case, step 603-1 to step 606-1 may further be performed. Optionally, the target DU may further obtain, from the source DU, a NG-RAN node UE XnAP ID allocated by the CU 1 to the UE when the UE communicates with the source cell, to associate the determined first beam information with a UE context that is returned by the target DU to the CU 3. For example, the determined first beam information may be associated with UE context setup response signaling that is sent by the target DU to the CU 3.

In embodiments shown in FIG. 6-1 and FIG. 6-2, FIG. 6A-1 and FIG. 6A-2, and FIG. 6B, there is an Xn interface between the CU 1 and the CU 3. If there is no Xn interface between the CU 1 and the CU 3, an NG interface-based handover procedure may be used to indicate the UE to perform the random access channel-less handover procedure. In other words, signaling exchanged between the CU 1 and the CU 3 may be forwarded via a core network element (for example, an access and mobility management function (access and mobility management function, AMF)). For example, for content sent by the CU 1 to the CU 3 by using HO request signaling, the CU 1 first sends the content to the AMF, for example, sends the content to the AMF by using an NGAP handover required (that is, HO Required) message, and then the AMF sends the content to the CU 3, for example, sends the content to the CU 3 by using an NGAP HO request message. For example, for content sent by the CU 3 to the CU 1 by using HO request acknowledge signaling, the CU 3 first sends the content to the AMF, for example, sends the content to the AMF by using an NGAP HO request acknowledge message, and then the AMF sends the content to the CU 1, for example, sends the content to the CU 1 by using an NGAP handover command (that is, HO Command) message.

This application provides a communication apparatus, and the communication apparatus may be configured to implement functions of the CU 3, the CU 1, or the target DU. The communication apparatus may be a CU 3, a CU 1, or a target DU. The communication apparatus includes units in one-to-one correspondence with the methods/operations/steps/actions performed by the CU 3, the CU 1 or the target DU in the foregoing method embodiments. The units may be implemented by a hardware circuit, software, or a combination of a hardware circuit and software. FIG. 7 is a diagram of a structure of a communication apparatus 800 according to an embodiment of this application. The communication apparatus 800 may include an interface unit 801 and a processing unit 802. Specifically, the processing unit 802 is configured to process signaling and/or data. The signaling and/or data may be data received by the interface unit 801, and processed signaling and/or data may also be sent by the interface unit 801.

In an implementation, when the communication apparatus 800 is a CU 3,
the processing unit 802 is configured to determine first beam information to be used for communication between a terminal device and a target cell, where the first beam information includes a beam identifier of a first beam, communication of the terminal device is to be handed over from a source cell to the target cell, and the source cell and the target cell of the terminal device are cells of a relay node; and
the interface unit 801 is configured to send random access channel-less handover configuration information to the terminal device, where the random access channel-less handover configuration information includes the first beam information.

In this implementation, for specific implementations of the interface unit 801 and the processing unit 802, refer to specific implementation steps of the CU 3 in FIG. 5, FIG. 5A, FIG. 6-1 and FIG. 6-2, FIG. 6A-1 and FIG. 6A-2, or FIG. 6B. Details are not described herein again.

In another implementation, when the communication apparatus shown in FIG. 8 is a CU 1,
the processing unit 802 is configured to determine first beam information to be used for communication between a terminal device and a target cell, where the first beam information includes a beam identifier of a first beam, communication of the terminal device is to be handed over from a source cell to the target cell, and the source cell and the target cell of the terminal device are cells of a relay node; and
the interface unit 801 is configured to send random access channel-less handover configuration information to the terminal device, where the random access channel-less handover configuration information includes the first beam information.

In this implementation, for specific implementations of the interface unit 801 and the processing unit 802, refer to specific implementation steps of the CU 1 in FIG. 6-1 and FIG. 6-2, FIG. 6A-1 and FIG.6A-2, or FIG. 6B. Details are not described herein again.

In still another implementation, when the communication apparatus shown in FIG. 8 is a target DU,
the interface unit 801 is configured to receive beam measurement information of a target cell of a terminal device from a first donor node, where the beam measurement information includes a beam identifier of at least one beam; and
the processing unit 802 is configured to: determine, based on the beam measurement information of the target cell, first beam information to be used for communication between the terminal device and the target cell, where the first beam information includes a beam identifier of a first beam, and the at least one beam includes the first beam; and send the first beam information to the first donor node.

Alternatively,
the interface unit 801 is configured to: receive first beam information from a first donor node, where the first beam information includes a beam identifier of a first beam, and the first beam information is beam information to be used for communication between a terminal device and a target cell; and send the first beam information to the first donor node, where the first beam information is included in an RRC message, and the RRC message is included in F1AP signaling.

In this implementation, for specific implementations of the interface unit 801 and the processing unit 802, refer to specific implementation steps of the target DU in FIG. 5, FIG. 5A, FIG. 6-1 and FIG. 6-2, FIG. 6A-1 and FIG. 6A-2, or FIG. 6B. Details are not described herein again.

FIG. 8 shows a communication apparatus 900 according to an embodiment of this application. The communication apparatus 900 is configured to implement functions of the CU 3, the CU 1, or the target DU. The apparatus may be a communication device or an apparatus used in the communication device, and the communication device may be a CU 3, a CU 1, or a target DU. The apparatus used in the communication device may be a chip system or a chip in the communication device. The chip system may include a chip, or may include a chip and another discrete component.

The communication apparatus 900 includes at least one processor 910, configured to implement a processing function of a device (for example, a CU 3, a CU 1, or a target DU) in the method provided in embodiments of this application. The communication apparatus 900 may further include a communication interface 920, configured to implement receiving and sending operations of a device (for example, a CU 3, a CU 1, or a target DU) in the method provided in embodiments of this application. In this embodiment of this application, the communication interface may be a transceiver, a circuit, a bus, a module, or another type of communication interface, and is configured to communicate with another device through a transmission medium. For example, the communication interface 920 is used by an apparatus in the communication apparatus 900 to communicate with the another device. The processor 910 receives and sends data through the communication interface 920, and is configured to implement the method in the foregoing method embodiments.

The communication apparatus 900 may further include at least one memory 930, configured to store program instructions and/or data. The memory 930 is coupled to the processor 910. The coupling in this embodiment of this application may be an indirect coupling or a communication connection between apparatuses, units, or modules in an electrical form, a mechanical form, or another form, and is used for information exchange between the apparatuses, the units, or the modules. The processor 910 may operate cooperatively with the memory 930. The processor 910 may execute the program instructions stored in the memory 930. At least one of the at least one memory may be included in the processor.

In this embodiment of this application, a specific connection medium between the communication interface 920, the processor 910, and the memory 930 is not limited. In this embodiment of this application, in FIG. 8, the memory 930, the processor 910, and the communication interface 920 are connected through a bus. The bus is represented by using a bold line in FIG. 8. A connection manner between other components is merely an example for description, and is not limited thereto. The bus may be classified into an address bus, a data bus, a control bus, and the like. For ease of representation, only one bold line is for representing the bus in FIG. 8, but this does not mean that there is only one bus or only one type of bus.

When the communication apparatus 900 is specifically used as an apparatus of a device (for example, a CU 3, a CU 1, or a target DU), for example, when the communication apparatus 900 is specifically a chip or a chip system, the communication interface 920 may output or receive a baseband signal. When the communication apparatus 900 is specifically a device (for example, a CU 3, a CU 1, or a target DU), the communication interface 920 may output or receive a radio frequency signal. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

When the communication apparatus 900 is a module used in a base station, the module in the base station implements the functions of the base station in the foregoing method embodiments. The module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The base station module herein may be a baseband chip of the base station, or may be a CU, a DU, or another module, or may be an apparatus in an O-RAN architecture, for example, an apparatus like an open CU or an open DU.

It should be noted that the communication interface 920 may be configured to perform a function of the interface unit 801, and the processor 910 may be configured to perform a function of the processing unit 802. Details are not described herein.

When the communication apparatus is a chip used in a CU 3, the chip implements a function of the CU 3 in the foregoing method embodiment, and the chip receives information from another device. Alternatively, the chip sends information to another device.

When the communication apparatus is a chip used in a CU 1, the chip implements a function of the CU 1 in the foregoing method embodiments. The chip receives information from another device. Alternatively, the chip sends information to another device.

When the communication apparatus is a chip used in the target DU, the chip implements a function of the target DU in the foregoing method embodiments. The chip receives information from another device (for example, UE or a CU). Alternatively, the chip sends information to another device.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an access network device or a terminal. Certainly, the processor and the storage medium may alternatively exist in a terminal or an access network device as discrete components.

All or a part of the foregoing embodiments may be implemented by using software, hardware, firmware, or any combination thereof. When the software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, or other programmable apparatuses. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media. The usable medium may be a magnetic medium, for example, a floppy disk, a hard disk drive, or a magnetic tape; or may be an optical medium, for example, a DVD; or may be a semiconductor medium, for example, a solid-state drive (solid-state drive, SSD).

In various embodiments of this application, unless otherwise stated or a logic conflict occurs, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

An embodiment of this application further provides a computer-readable storage medium. The computer-readable storage medium stores computer-executable instructions. When the computer-executable instructions are executed, the methods performed by the CU 3, the CU 1, or the target DU in the foregoing method embodiments are implemented.

An embodiment of this application further provides a computer program product. The computer program product includes a computer program. When the computer program is executed, the methods performed by the CU 3, the CU 1, or the target DU in the foregoing method embodiments are implemented.

An embodiment of this application further provides a communication system. The communication system includes a CU 3, a CU 1, or a target DU. Each device is configured to perform the method performed by the respective device in the foregoing method embodiments.

It should be noted that, for each of the foregoing method embodiments, for ease of description, the method embodiments are described as a series of action combination. But a person skilled in the art is to know that this application is not limited to any described sequence of the action, as some operations can use other sequences or can be executed simultaneously according to this application. In addition, a person skilled in the art is also to learn that embodiments described in this specification are all example embodiments, and the involved actions and modules are not necessarily required to this application.

The descriptions of embodiments provided in this application may be mutually referenced, and the descriptions of embodiments have different focuses. For a part not described in detail in an embodiment, refer to the related descriptions in another embodiment. For the purpose of convenient and brief descriptions, for example, for functions of the apparatuses and devices provided in embodiments of this application and performed steps, refer to the related descriptions in the method embodiments of this application. The method embodiments and the apparatus embodiments may also be mutually referenced, combined, or cited.

Finally, it should be noted that the foregoing embodiments are merely intended for describing the technical solutions of this application, but not for limiting this application. Although this application is described in detail with reference to the foregoing embodiments, a person of ordinary skill in the art should understand that modification may still be made to the technical solutions described in the foregoing embodiments or equivalent replacements may be made to some or all technical features thereof, without departing from the scope of the technical solutions of embodiments of this application.

## Claims

1. A communication method, wherein the method comprises:
determining first beam information to be used for communication between a terminal device and a target cell, wherein the first beam information comprises a beam identifier of a first beam, communication of the terminal device is to be handed over from a source cell to the target cell, and the source cell and the target cell are cells of a relay node; and
sending random access channel-less handover configuration information to the terminal device, wherein the random access channel-less handover configuration information comprises the first beam information.

2. The method according to claim 1, wherein before the determining the first beam information to be used for communication between the terminal device and the target cell, the method further comprises:
receiving beam measurement information of the target cell from a source distributed unit DU, wherein the beam measurement information comprises a beam identifier of at least one beam, the at least one beam comprises the first beam, and the source DU belongs to the relay node.

3. The method according to claim 2, wherein the determining the first beam information to be used for communication between the terminal device and the target cell comprises:
determining the first beam information based on the beam measurement information of the target cell.

4. The method according to claim 2, wherein the determining the first beam information to be used for communication between the terminal device and the target cell comprises:
sending the beam measurement information of the target cell to a target DU, wherein the target DU belongs to the relay node; and
receiving the first beam information from the target DU.

5. The method according to claim 1 or 2, wherein the determining the first beam information to be used for communication between the terminal device and the target cell comprises:
receiving the first beam information from a second donor node.

6. The method according to claim 3 or 5, wherein the method further comprises:
sending the first beam information to the target DU, wherein the target DU belongs to the relay node; and
receiving the first beam information from the target DU, wherein the first beam information is comprised in an RRC message.

7. The method according to any one of claims 1 to 6, wherein the sending the random access channel-less handover configuration information to the terminal device comprises:
sending the random access channel-less handover configuration information to the terminal device via the source DU; or
sending the random access channel-less handover configuration information to the terminal device via the second donor node and the source DU, wherein
the source DU belongs to the relay node.

8. The method according to any one of claims 1 to 7, wherein before the determining the first beam information to be used for communication between the terminal device and the target cell, the method further comprises:
receiving first information; and
determining, based on the first information, that the terminal device needs to perform a random access channel-less handover procedure.

9. The method according to claim 8, wherein the first information is from the second donor node, and the first information indicates that the terminal device needs to perform the random access channel-less handover procedure.

10. The method according to claim 8, wherein the first information is from the source DU or the second donor node, the first information indicates that the source cell of the terminal device and the target cell of the terminal device are cells of the relay node, and the source DU belongs to the relay node.

11. The method according to claim 10, wherein the first information is from the second donor node, and the method further comprises:
receiving a cell identifier of the source cell and a cell identifier of the target cell that are from the second donor node.

12. The method according to claim 8, wherein the first information is from the target DU, the target DU belongs to the relay node, the first information indicates cell information of a first cell, the first cell is a cell activated when the relay node is connected to the second donor node, and
the determining, based on the first information, that the terminal device needs to perform the random access channel-less handover procedure comprises:
receiving a cell identifier of the source cell and a cell identifier of the target cell that are from the second donor node;
in response to that the cell identifier of the source cell is in the cell information of the first cell and the cell identifier of the target cell is in cell information of a second cell, determining that the source cell and the target cell are cells of the relay node, wherein the second cell is a cell activated when the relay node is connected to the first donor node; and
in response to that the source cell and the target cell are cells of the relay node, determining that the terminal device needs to perform the random access channel-less handover procedure.

13. The method according to any one of claims 1 to 12, wherein the method is applied to the first donor node; and the relay node has established a connection with the first donor node; or a connection between the relay node and a donor node is migrated from the second donor node to the first donor node.

14. The method according to any one of claims 1 to 3, wherein the method is applied to a second donor node, and a connection between the relay node and a donor node is migrated from the second donor node to a first donor node.

15. The method according to claim 14, wherein the sending the random access channel-less handover configuration information to the terminal device comprises:
sending the first beam information to the first donor node;
receiving the random access channel-less handover configuration information from the first donor node; and
sending the random access channel-less handover configuration information to the terminal device via the source DU, wherein the source DU belongs to the relay node.

16. The method according to claim 14 or 15, wherein the method further comprises:
sending the beam measurement information of the target cell to the first donor node.

17. The method according to any one of claims 14 to 16, wherein the method further comprises:
sending first information to the first donor node, wherein
the first information indicates that the source cell of the terminal device and the target cell of the terminal device are cells of the relay node; or the first information indicates that the terminal device needs to perform the random access channel-less handover procedure.

18. The method according to claim 17, wherein the method further comprises:
sending a cell identifier of the source cell and a cell identifier of the target cell to the first donor node.

19. A communication method, wherein the method comprises:
receiving beam measurement information of a target cell of a terminal device from a first donor node, wherein the beam measurement information comprises a beam identifier of at least one beam;
determining, based on the beam measurement information of the target cell, first beam information to be used for communication between the terminal device and the target cell, wherein the first beam information comprises a beam identifier of a first beam, and the at least one beam comprises the first beam; and
sending the first beam information to the first donor node.

20. A communication method, wherein the method comprises:
receiving first beam information from a first donor node, wherein the first beam information comprises a beam identifier of a first beam, and the first beam information is beam information to be used for communication between a terminal device and a target cell; and
sending the first beam information to the first donor node, wherein the first beam information is comprised in an RRC message.

21. The method according to claim 19 or 20, wherein the method further comprises:
sending first information to the first donor node, wherein the first information indicates cell information of a first cell, and the first cell is a cell activated when a relay node is connected to the second donor node.

22. The method according to any one of claims 19 to 21, wherein the method is applied to a target DU, the target DU belongs to the relay node, and a source cell and the target cell of the terminal device are cells of the relay node.

23. A communication apparatus, wherein the communication apparatus comprises a processing module and a transceiver module, and the processing module and the transceiver module are configured to cause the communication apparatus to implement the method according to any one of claims 1 to 18 or the method according to any one of claims 19 to 22.

24. A communication apparatus, wherein the communication apparatus comprises a processor, the processor is coupled to a memory, the memory is configured to store a program or instructions, and when the program or the instructions are executed by the processor, the communication apparatus is caused to perform the method according to any one of claims 1 to 18 or the method according to any one of claims 19 to 22.

25. A computer-readable storage medium, wherein the computer-readable storage medium stores a computer program or instructions, and when the computer program or the instructions are executed, a computer is enabled to perform the method according to any one of claims 1 to 18 or the method according to any one of claims 19 to 22.

26. A computer program product, comprising a computer program or instructions, wherein when the computer program or the instructions are executed, a computer is enabled to perform the method according to any one of claims 1 to 18, or the method according to any one of claims 19 to 22.
